# EUROPÄISCHE PATENTSCHRIFT

(11) **EP 3 140 126 B1**
(45) Veröffentlichungstag und Bekanntmachung des Hinweises auf die Patenterteilung: **26.12.2018**
(21) Anmeldenummer: 15720260.7
(22) Anmeldetag: 16.04.2015
(51) Int. Cl.: B42D 25/29, B42D 25/435, B23K 26/00

(54) **VERFAHREN UND SYSTEM ZUM HERSTELLEN EINES PARTIELL DEMETALLISIERTEN SICHERHEITSELEMENTS**
METHOD AND SYSTEM FOR PRODUCING A PARTIALLY DEMETALLISED SECURITY ELEMENT
ÉLÉMENT STRATIFIÉPROCÉDÉ ET SYSTÈME POUR PRODUIRE UN ÉLÉMENT DE SÉCURITÉ PARTIALLEMENT DÉMÉTALLISÉ

(30) Priorität: 06.05.2014 DE 102014006527; 30.10.2014 DE 102014016051
(43) Veröffentlichungstag der Anmeldung: 15.03.2017
(73) Patentinhaber: Giesecke+Devrient Currency Technology GmbH, 81677 München (DE)
(72) Erfinder: LOCHBIHLER, Hans, 80337 München (DE); GREGAREK, André, 81671 München (DE); SCHINABECK, Josef, 82467 Garmisch-Partenkirchen (DE)
(86) Internationale Anmeldenummer: PCT/EP2015/000802
(87) Internationale Veröffentlichungsnummer: WO 2015/169422

(56) Entgegenhaltungen:
- US-A- 3 980 818
- US-A- 4 588 665
- US-A1- 2004 028 869
- US-A1- 2012 015 118
- US-A1- 2012 064 303

## Beschreibung

Die Erfindung betrifft ein Verfahren zum partiellen Demetallisieren eines Sicherheitselements, ein entsprechendes Sicherheitselement, ein Wertdokument mit einem solchen Sicherheitselement und eine Vorrichtung zum Herstellen eines solchen Sicherheitselements.
Wertdokumente im Sinne der Erfindung sind unter anderem Banknoten, Aktien, Anleihen, Urkunden, Gutscheine, Schecks, Flugscheine, hochwertige Eintrittskarten, Etiketten zur Produktsicherung, Kredit- oder Geldkarten, aber auch andere fälschungsgefährdete Dokumente, wie Pässe, Ausweiskarten oder sonstige Ausweisdokumente.
Wertdokumente, insbesondere Banknoten, werden üblicherweise aus Papiersubstraten, Polymersubstraten öder Kombinationen aus Papier und Polymer gefertigt, die besondere Sicherheitsmerkmale, wie z.B. einen zumindest teilweise in das Papier eingearbeiteten Sicherheitsfaden oder ein Wasserzeichen aufweisen. Als weiteres Sicherheitsmerkmal können sogenannte Fensterfolien, Sicherheitsfäden, -bänder auf das Wertdokument aufgeklebt/laminiert oder eingebracht werden. Sicherheitselemente umfassen üblicherweise als Träger- bzw. Basismaterial ein Polymer oder eine Polymerzusammensetzung. Typischerweise weisen Sicherheitselemente optisch variable Sicherheitsmerkmale wie Hologramme oder bestimmte Farbkippeffekte auf, um so eine bessere Fälschungssicherheit zu gewährleisten. Der besondere Vorteil von optisch variablen Sicherheitselementen ist, dass die Sicherheitsmerkmale auf diesen Sicherheitselementen nicht durch bloßes Kopieren mit Kopiergeräten nachgeahmt werden können, da Effekte eines optisch variablen Sicherheitsmerkmals durch das Kopieren verloren gehen oder sogar nur schwarz erscheinen.

Bei bestehenden Wertdokumenten mit optisch variablen Sicherheitselementen, die beispielsweise mehrere optische Effekte nebeneinander aufweisen, ist jedoch nachteilig, dass die Herstellung mit steigender Komplexität im Design sehr zeitaufwendig und kostenintensiv ist. Beispielsweise ist bei der Herstellung eines Sicherheitselements, das nebeneinander ein Hologramm und gleichzeitig sehr feine, kleinstrukturierte transparente oder teilweise demetallisierte Bereiche (wie Negativmuster bzw. Negativtext) aufweist, die Herstellung der demetallisierten Bereiche technisch sehr anspruchsvoll und andererseits eine Limitierung der Feinheit der demetallisierten Bereiche durch das verwendete Verfahren zur Demetallisierung vorgegeben bzw. begrenzt.

Die typischen Herstellverfahren für ein Sicherheitselement mit verschiedenen nebeneinander angeordneten optischen Effekten, wie Hologramm und Negativmuster, sehen vor, dass, bei der Herstellung ein Trägermaterial zuerst vollflächig metallisiert wird und die Bereiche, die die Negativmuster aufweisen sollen, in einem weiteren Verfahrensschritt wieder demetallisiert werden. Da die Strukturgröße der Negativmuster häufig im Bereich von 20 µm bis 80 µm liegt, können die Negativmuster nicht mehr über eine Maske während des Metallisierungsvörgangs eingebracht werden, sondern müssen separat hergestellt werden.

Um dieses partielle Demetallisieren besonders selektiv und genau vornehmen zu können, ist aus dem Stand der Technik folgendes Vorgehen bekannt:
Ein Substrat wird mit einem Gitter versehen, welches ein hohes Aspektverhältnis beispielsweise 0,4 aufweist, wobei das Aspektverhältnis durch das Verhältnis der Strukturtiefe zur Strukturbreite definiert ist. Das gesamte Substrat und damit auch das Gitter werden metallisch bedampft. Die Metallschicht ist im Bereich solcher Gitter aufgrund der vergrößerten Oberfläche deutlich dünner gegenüber einer Metallschicht auf glatten Bereichen. Daher lässt sich das Metall an diesen Stellen entweder durch Laserbestrahlung oder durch Ätzen leichter entfernen als an den glatten Oberflächen. Somit kann mittels dieses Vorgehens Substrat im Bereich des Gitters partiell demetallisiert werden, während die anderen Bereiche - insbesondere Bereiche, die flacher sind als die des Gitters - metallisiert bleiben. Das demetallisierte Gitter gibt so ein Negativmuster wieder, welches neben metallisierten Bereichen angeordnet ist. Für diese Art der Demetallisierung ist somit eine Kombination aus verdünnter Metallschicht und einer "Lichtfalle", die beide durch hohe Aspektverhältnisse erzeugt werden, erforderlich. Ein solches Verfahren ist beispielsweise aus EP 1 846 253 oder EP 1 843 901 bekannt. Dieses Verfahren basiert auf der lokalen Lichtabsorption, die mit der *effective-medium theory* berechnet werden kann.

Mit der Anforderung, optische Effekte, Muster mit immer größerer Genauigkeit und feinerer Strukturierung sowie Komplexität bereitzustellen, ergibt sich die Situation, dass feinere Strukturen das Prägen und Metallisieren von immer feineren Gittern auf dem Substrat erfordern. Bereits jetzt liegen die Anforderungen an die Positionsgenauigkeit von Mustern sowie der Strichstärke von Mustern bei vielen Anwendungen bei unter 20 µm.

Zwar ist das Prägen sowie das Metallisieren von feinen Gittern technisch beherrscht, jedoch steigt der Aufwand und das Risiko für Defekte am Endprodukt, je feiner und tiefer die Strukturen werden. Beim Prägen solcher feinen Gitter wird die Qualität der abgeformten Struktur schlechter, je höher das Aspektverhältnis des Gitters ist und je feiner, kleiner die Gitterstruktur wird. Weiterhin hängt die Prägegeschwindigkeit bei Rolle-zu-Rolle-Prägemaschinen vom Aspektverhältnis der zu prägenden Strukturen ab. Folglich sinkt die Herstellungsgeschwindigkeit mit zunehmendem Aspektverhältnis und Feinheit der Gitter.

In US 2012015118 A1 wird die Farbe einer Metallschicht durch Subwellenlängenstrukturen beeinflusst. US 4588665 zeigt eine Lasereinheit für Mikrofilme. In einer Partikelmatrix in einer CD oder DVD werden gemäß US 2004/028869 mittels einer Lasereinheit Plasmonen angeregt. In US 2012/064303 wird eine Ätzmaske auf unterschiedlich strukturierte metallisierte Bereiche einheitlich aufgebracht und ausgenutzt, dass die Maskenschicht bei größerer Strukturoberfläche dünner und somit unwirksam wird.

Es ist daher Aufgabe der vorliegenden Erfindung, ein Sicherheitselement bereitzustellen, welches eine hohe Strukturauflösung aufweist sowie eine hohe Komplexität im Design erlaubt und gleichzeitig in einfacher Weise hergestellt werden kann.

Diese Aufgabe wird durch die Gegenstände der unabhängigen Ansprüche gelöst. Bevorzugte Ausführungsformen sind in den abhängigen Ansprüchen definiert.

Ein erster Aspekt der Erfindung betrifft ein Verfahren zum Herstellen eines Sicherheitselements mit partiell demetallisierter Metallschicht des Sicherheitselements. Insbesondere betrifft dieser Aspekt ein Verfahren zum Herstellen eines partiell demetallisierten Schichtelements, umfassend die Schritte: - Bereitstellen eines Schichtelements, aufweisend
-- ein Trägersubstrat mit einer Fläche, die mindestens einen ersten und einen zweiten Bereich aufweist, wobei der erste Bereich eine erste Struktur aufweist, die von einer zweiten Struktur des zweiten Bereichs verschieden ist, und
-- mindestens eine auf der Fläche des Trägersubstrats angeordnete Metallschicht; und
   - Entfernen der Metallschicht durch Anregung von Oberflächenplasmon-Polaritonen mittels elektromagnetischer Strahlung in dem ersten Bereich, der die erste Struktur aufweist.
      Vorzugsweise umfasst das Verfahren die Schritte:
      Bereitstellen eines Schichtelements, aufweisend
      -- ein Trägersubstrat mit einer Fläche, die mindestens einen ersten Bereich aufweist, wobei
         der erste Bereich eine erste Struktur aufweist, und
      -- mindestens eine auf der Fläche des Trägersubstrats angeordnete Metallschicht; und
   - Entfernen der Metallschicht durch Anregung von Oberflächenplasmon-Polaritonen mittels elektromagnetischer Strahlung in dem ersten Bereich, der die erste Struktur aufweist.

Insbesondere ist die Fläche des Trägersubstrats eine Oberfläche. Insbesondere bilden die Fläche des Trägersubstrats und die Metallschicht eine Grenzfläche. Insbesondere ist der erste Bereich ein erster Oberflächenbereich und der zweite Bereich ein zweiter Oberflächenbereich bzw. ein erster und zweiter Grenzflächenbereich. Insbesondere ist die Struktur eine Oberflächenstruktur bzw. eine Grenzflächenstruktur. Insbesondere bilden die erste Struktur und die Metallschicht ein metallisches Gitter.

Im Weiteren wird der Begriff "Oberflächenplasmon-Polaritonen" mit OPPs abgekürzt.

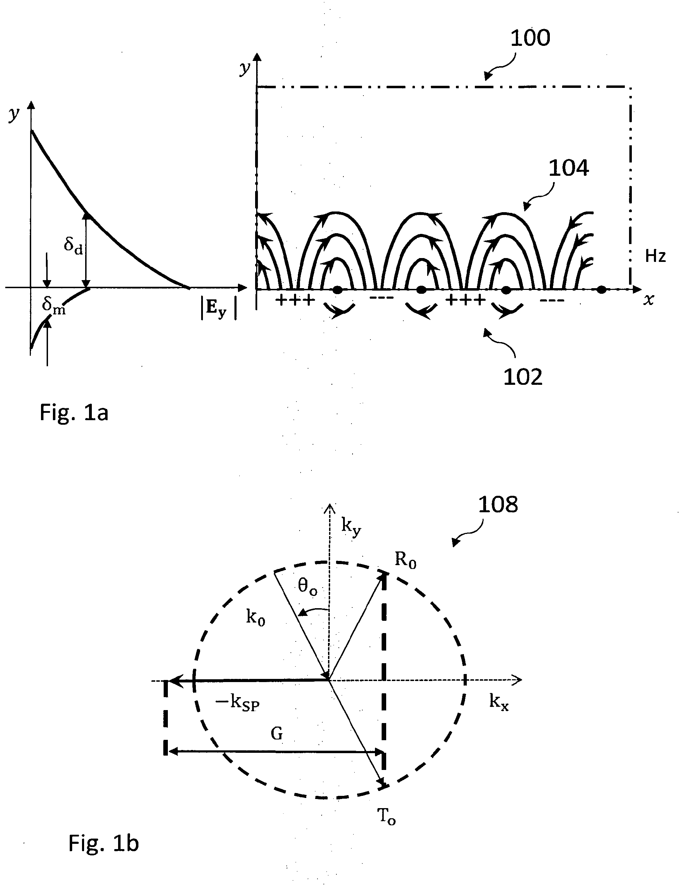

Oberflächenplasmon-Polaritonen (OPPs) sind an metallische Grenzflächen gebundene elektromagnetische Strahlung, die sich entlang ihrer Grenzschicht ausbreitet und dabei eine Absorption erleidet. Die Anregung von OPPs erfolgt, wenn die Impulserhaltung von einfallenden Photonen und OPPs über Vielfache des reziproken Gittervektors eines metallischen Gitters gewährleistet ist. Weiterhin wird insbesondere auf die Figuren 1a und 1b verwiesen, in welchem die Anregung von OPPs genauer dargelegt wird. Der Anregung von OPPs liegt die kollektive Resonanzabsorption über die Gitterwechselwirkung zugrunde.

Unter dem Begriff "Schichtelement" ist insbesondere ein Element zu verstehen, das mindestens eine dielektrische Schicht und eine metallische Schicht umfasst. Ein Schichtelement kann aber auch mehr als nur diese beiden Schichten umfassen. Insbesondere kann ein Schichtelement in unterschiedlichen Bereichen verschiedene Schichten, verschiedene Anzahlen von Schichten und/oder verschiedene Schichtreihenfolgen aufweisen.

Unter dem Begriff "Trägersubstrat" ist insbesondere eine (Träger-)Schicht zu verstehen, die modulierbar ist, um eine erste Struktur und/ oder eine zweite Struktur in diese (modulierbare) (Träger-)Schicht einzubringen bzw. auszubilden. Beispielsweise kann eine modulierbare (Träger-)Schicht bzw. ein Trägersubstrat eine PVC- oder PET-Folie sein, in die mittels Prägen Strukturen einbringbar sind. Weiterhin beispielsweise kann ein Trägersubstrat eine PET-Folie sein, auf die ein Prägelack aufgebracht ist, welcher mit einer Strukturierung versehen ist. Weiterhin kann ein Trägersubstrat eine Harz- oder Lackschicht sein, die modulierbar ist, wie beispielsweise durch Präge- und/ oder Ätzverfahren. Ein Trägersubstrat kann ebenfalls eine Chipkarte oder ein Personalausweis oder ein Grundsubstrat für eine solche Chipkarte/Personalausweis sein. Weiterhin vorzugsweise ist das Trägersubstrat für die verwendete elektromagnetische Strahlung transparent.

Insbesondere kann ein Trägersubstrat auch mehrere Flächen/ Grenzflächen/Oberflächen aufweisen, die jeweils eine Modulation mit einer ersten und/ oder einer zweiten Struktur/ Grenzflächen-/ Oberflächenstruktur aufweisen. Vorzugsweise ist das Trägersubstrat zumindest im ersten Bereich dielektrisch. Vorzugsweise weist das Trägersubstrat mindestens eine dielektrische Schicht auf.

Insbesondere weist das Schichtelement ein (metallisches) Gitter auf, welches durch die erste Struktur und die Metallschicht gebildet wird, wobei dieses Gitter eine Metall-Dielektrikum-Grenzfläche aufweist. Diese Grenzfläche ist durch die Metallschicht und das Dielektrikum des Trägersubstrats gebildet. Das Trägersubstrat ist zumindest im ersten Bereich ein dielektrisches Trägersubstrat.

Unter einer Verschiedenheit einer ersten Struktur von einer zweiten Struktur ist insbesondere zu verstehen, dass sich die erste und die zweite Struktur in mindestens einem Geometrieparameter bzw. Strukturparameter unterscheiden. Beispielsweise kann die erste Struktur ein periodisches Rechteckprofil aufweisen, während die zweite Struktur glatt ist. Weiterhin sind die erste Struktur/Oberflächenstruktur und die zweite Struktur als verschieden anzusehen, wenn die eine Struktur ein Rechteckprofil mit einer Periode von 350 nm und die andere Struktur ein Reckteckprofil mit einer Periode von 500 nm aufweist.

Unter einer auf der Fläche des Trägersubstrats angeordneten Metallschicht ist insbesondere eine auf der Fläche des Trägersubstrats aufgebrachte metallische Schicht zu verstehen. Die Metallschicht kann beispielsweise mittels Bedampfen, wie dem physikalischen Gasphasenauftrag (auch bekannt unter dem Begriff Physical Vapour Deposition, PVD), auf die (Ober-)Fläche des Trägersubstrats aufgebracht werden.

Die Metallschicht wird insbesondere derart aufgetragen, dass der erste Bereich/ Grenzflächenbereich und der zweite Bereich/ Grenzflächenbereich der (Ober-)Fläche des Trägersubstrats (gleichmäßig) mit der Metallschicht bedeckt werden.

Vorzugsweise kann an der Metallschicht zumindest eine weitere, dielektrische Schicht angeordnet sein. Vorzugsweise ist die Metallschicht in diesem Fall zwischen dem Trägersubstrat und der weiteren, dielektrischen Schicht angeordnet.

Unter einem Entfernen der Metallschicht durch Anregung von OPPs mittels elektromagnetischer Strahlung in dem ersten Bereich, der die erste Struktur aufweist, ist insbesondere zu verstehen, dass die Metallschicht bei vollflächiger Bestrahlung des Schichtelements, selektiv nur in dem ersten Bereich entfernt wird, während die Metallschicht im zweiten Bereich trotz Bestrahlung nicht entfernt wird bzw. nicht in dem Umfang entfernt wird wie im ersten Bereich.

Vorzugsweise werden die OPPs mittels der elektromagnetischen Strahlung (Licht) nur im ersten Bereich angeregt und unterstützen in diesem ersten Bereich das Entfernen der Metallschicht. Insbesondere wird das (selektive) Entfernen der Metallschicht im ersten Bereich aufgrund der spezifischen Wechselwirkung die auf das Schichtelement einfallende elektromagnetische Strahlung mit der ersten Struktur erreicht, die OPPs hervorruft. Nachdem die zweite Struktur von der ersten Struktur verschieden ist, werden im zweiten Bereich keine OPPs in einer Weise angeregt, die zu einem Entfernen bzw. vollständigen Entfernen bzw. Ablation der Metallschicht führen könnte. Vorzugsweise umfasst der Begriff "Entfernen" Umwandeln. Ein Umwandeln liegt beispielsweise vor, wenn die Metallschicht durch die Anregung von OPPs in ein Oxid umgewandelt wird und/oder zu "Tröpfchen" koaguliert, so dass für einen Betrachter der Eindruck entsteht, die Metallschicht sei nicht mehr vorhanden oder zumindest transluzent, obwohl diese weiterhin in einer umgewandelten Form vorliegt. Zum Beispiel entsteht aus einer Metallschicht aus Aluminium bei einer Umwandlung eine Schicht aus Aluminiumoxid. Bei einem Entfernen können mit der Metallschicht auch weitere mit der Metallschicht verbundene Schichten abgetragen/ entfernt werden. Solche verbundenen Schichten können Metallschichten und/oder dielektrische Schichten sein. Z.B. kann ein Colorshift-Aufbau, der einen Schichtaufbau Absorberschicht-Dielektrikum-Reflexionsschicht oder Absorberschicht-Dielektrikum-Absorberschicht aufweist, entfernt werden. In diesem Fall stellt die Metallschicht beispielsweise eine Absorberschicht oder die Reflexionsschicht des Colorshift-Aufbaus dar. Wird eine solche Metallschicht entfernt, wird vorzugsweise der gesamte Colorshift-Aufbau entfernt werden, weil die Verbindung zur Trägerschicht aufgehoben/entfernt wird. Vorteilhafterweise können so Negativmuster in einen Bereich mit Colorshift-Effekt eingebracht werden. Insbesondere kann ein Umwandeln vorliegen, wenn die Metallschicht zwischen mindestens zwei Schichten angeordnet ist.

Weiterhin vorzugsweise kann das Schichtelement bzw. das Trägersubstrat weitere Bereiche umfassen, die Strukturen aufweisen, die sich von der ersten und der zweiten Struktur unterscheiden. Insbesondere können die Strukturen solcher weiteren Bereiche derart ausgestaltet sein, dass diese ebenfalls die Anregung von OPPs unterstützen oder nicht. Sollten weitere Strukturen ebenfalls die Anregung von OPPs unterstützen, kann durch die Anregung von OPPs in den Bereichen, welche die weiteren Strukturen aufweisen, die Metallschicht ebenfalls entfernt werden.

Es ist ein Vorteil, dass Schichtelemente selektiv in ersten Bereichen durch die Anregung von OPPs demetallisiert werden können, während andere Bereiche nicht demetallisiert werden. Es ist insbesondere vorteilhaft, dass die ersten Bereiche sehr klein und filigran ausgestaltet werden können und dennoch eine sehr selektive Demetallisierung möglich ist, d.h. dass nur die sehr kleinen und filigranen ersten Bereiche demetallisiert werden, ohne dass andere Bereiche ebenfalls demetallisiert werden, wobei die dazu vorgesehene erste Struktur kein hohes Aspektverhältnis aufweisen muss. Vorteilhafterweise können Bereiche, insbesondere erste Bereiche, mit einer Breite von kleiner 4 µm realisiert werden. Ebenso können aufgrund des Designs bzw. der Anordnung von ersten und zweiten Bereichen sehr schmale/kleine zweite Bereiche realisiert werden.

Weiterhin vorzugsweise umfasst der Schritt des Entfernens: Bestrahlen des ersten und des zweiten Bereichs des Schichtelements mit elektromagnetischer Strahlung (Licht), wobei die Metallschicht durch die elektromagnetische Strahlung angeregten OPPs nur im ersten Bereich aufgrund der ersten Struktur entfernt wird.

Insbesondere kann ein Bestrahlen des ersten und des zweiten Bereichs gleichzeitig erfolgen, wobei dennoch die Metallschicht nur in dem ersten Bereich entfernt wird. In gleicher Weise kann ein Bestrahlen des ersten Bereichs vor oder nach einem Bestrahlen des zweiten Bereichs erfolgen, wobei dennoch die Metallschicht nur in dem ersten Bereich entfernt wird.

Die Bereiche von Schichtelementen für Sicherheitselemente können durchaus in einem Größenbereich von kleiner oder gleich 80 µm liegen. Somit bedecken bzw. bearbeiten die Bearbeitungsmittel, wie Laserstrahl, Ätzmittel etc., häufig größere Flächen z.B. 1 cm² als die Abmessung eines Bereichs beträgt. Folglich kann im großtechnischen Einsatz eine Selektion der zu bearbeiteten Bereiche nicht mehr allein durch das Bearbeitungsmittel z.B. durch einen Laserwriter bzw. Laserbeschrifter erfolgen, da dies zu zeitintensiv wäre.

Weiterhin werden im großtechnischen Einsatz Rolle-zu-Rolle-Verfahren eingesetzt, so dass das Schichtelement an dem Bearbeitungsmittel vorbeigeführt wird und während des Vorbeiführens bearbeitet wird. Um eine großflächige und schnelle Bearbeitung zu gewährleisten, werden die Bearbeitungsmittel selbst, wie Laser, häufig nicht-selektiv auf das gesamte Schichtelement angewandt. D.h. beispielsweise für eine Demetallisierung mittels Laserstrahlung, dass eine große (Ober-)Fläche oder sogar die gesamte (Ober-)Fläche eines Schichtelements bestrahlt wird, selbst wenn nur vergleichsweise geringe Bereiche überhaupt demetallisiert werden sollen.

Es ist daher vorteilhaft, dass durch die Anordnung der verschiedenen Strukturen, nämlich der ersten und der zweiten Struktur, eine selektive Wechselwirkung des Bearbeitungsmittels mit der jeweiligen Struktur erzielt wird, auch wenn das Bearbeitungsmittel selbst nicht-selektiv angewendet wird. In diesem Zusammenhang ist besonders vorteilhaft, dass zum Demetallisieren von Bereichen mittels der Anregung von OPPs, auch die Struktur des Schichtelements viel einfacher herstellbar ist, da keine hohen Aspektverhältnisse erforderlich sind, um eine Selektion mittels einer Wechselwirkung von Struktur und Bearbeitungsmittel zu erreichen.

Vorzugsweise umfasst der Schritt des Bereitstellens eines Trägersubstrats den Schritt: Ausbilden der ersten Struktur in dem ersten Bereich des Trägersubstrats.

Unter dem Begriff "Ausbilden" kann insbesondere verstanden werden, dass die erste Struktur und/oder die zweite Struktur eingebracht wird. Ein solches Einbringen kann beispielsweise mittels Prägen erfolgen.

Weiterhin vorzugsweise weist das Trägersubstrat dielektrisches Material auf. Bevorzugt weist das Trägersubstrat eine Prägeschicht auf. Vorteilhafterweise enthält bzw. umfasst die Prägeschicht die erste Struktur. Zusätzlich oder alternativ umfasst die Prägeschicht die zweite Struktur.

Vorzugsweise umfasst der Schritt des Bereitstellens eines Trägersubstrats den Schritt: Anordnen einer Metallschicht auf der Fläche des Trägersubstrats.

Unter der Begrifflichkeit "Anordnen einer Metallschicht auf der Fläche des Trägersubstrats" kann beispielsweise ein Aufbringen bzw. Auftragen einer Metallschicht verstanden werden. Dies kann mittels PVD Bedampfung, wie z.B. thermischen Verdampfen, Elektronenstrahlbedampfen oder Sputtern erfolgen.

Weiterhin vorzugsweise weist die Metallschicht eine Schichtdicke von 10 nm bis 200 nm auf.

Weiterhin bevorzugt weist die Metallschicht eine Schichtdicke von 20 nm bis 100 nm auf. Insbesondere weist die Schichtdicke im ersten Bereich eine Schichtdicke von 30 nm bis 60 nm, von 50 nm bis 70 nm und/oder von 60 nm bis 80 nm auf. Besonders bevorzugt weist die Metallschicht eine Schichtdicke zwischen 30 nm und 80 nm auf.

Weiterhin vorzugsweise umfasst die Metallschicht als Material Aluminium (Al) und/oder Silber (Ag) und/oder Kupfer (Cu) und/oder Chrom (Cr). Insbesondere kann die Metallschicht auf einer Legierung basieren, die ein oder mehrere der oben angegebenen Materialien aufweist.

Vorteilhafterweise weist die erste Struktur ein Aspektverhältnis von kleiner 0,3 auf.

Weiterhin bevorzugt weist die erste Struktur ein Aspektverhältnis von kleiner 0,2 auf. Besonders bevorzugt weist die erste Struktur ein Aspektverhältnis zwischen 0,05 und 0,2 auf. Weiterhin bevorzugt weist die erste Struktur ein Aspektverhältnis zwischen 0,05 und 0,1 oder zwischen 0,1 und 0,2 auf. Unter einem Aspektverhältnis ist insbesondere das Verhältnis von Strukturtiefe zu Strukturbreite zu verstehen. Beispielsweise ist als Strukturtiefe einer dreiecksförmigen Grenzflächenstruktur der Abstand bzw. die Niveaudifferenz von einer Dreiecksspitze zum nächsten Dreiecksgraben zu verstehen. Als Strukturbreite ist der Abstand von Dreiecksspitze zur nächstliegenden Dreiecksspitze zu verstehen. Bei periodischen Strukturen mit symmetrischem Profil ist unter der Strukturbreite die halbe Periode zu verstehen, während die Strukturtiefe der Spitze-zu-Tal-Abstand ist.

Weiterhin vorzugsweise ist die erste Struktur eine Reliefstruktur.

Vorteilhafterweise ist die erste Struktur aufgrund des niedrigen Aspektverhältnisses, nämlich kleiner als 0,3, einfacher und schneller herstellbar als eine Struktur mit einem Aspektverhältnis von größer 0,3. Insbesondere können erste Strukturen mit dem Aspektverhältnis von kleiner 0,3 schneller und einfacher im Rolle-zu-Rolle Prägeverfahren hergestellt werden. Auch die Formtreue, d.h. die Einhaltung der festgelegten Struktur, ist besser möglich. Es ist ein großer Vorteil, dass die erste Struktur mit einem Aspektverhältnis von kleiner 0,3 dennoch demetallisiert werden kann.

Vorzugsweise weist die erste Struktur eine eindimensional periodische Struktur, insbesondere eine periodische Struktur eines Beugungsgitters, auf.

Das Gitterprofil des Beugungsgitters kann eine beliebige Geometrie aufweisen. Vorzugsweise weist das Gitterprofil keine Hinterschnitte, also keine überhängenden Bereiche auf.

Beispielsweise entspräche einer eindimensional periodischen Struktur ein Wellenmuster. Ein solches Wellenmuster kann beispielsweise sinusförmig sein. In diesem Fall weist die periodische Struktur in eine (Raum-)Richtung ein Profil entsprechend einer Sinusfunktion auf, während in einer dazu orthogonalen (Raum-)Richtung das Profil einer geraden Linie entspricht, die zur jeweiligen Niveaulinie korrespondiert. In anderen Worten ist eine eindimensional periodische Struktur mit einem (Stab-)Gitter vergleichbar.

Die erste Struktur kann weiterhin vorzugsweise eine zweidimensional periodische Struktur aufweisen. Eine zweidimensionale periodische Struktur ist beispielsweise in WO 2012/156049 A1 beschrieben. Alternativ können Sinus-Kreuzgitter verwendet werden.

Insbesondere können die Perioden in die jeweilige (Raum-)Richtung bei einer zweidimensional periodischen Struktur voneinander verschieden sein.

In diesem Zusammenhang ist der Begriff "periodisch" derart zu verstehen, dass bedingt durch Herstellungsverfahren Abweichungen von einer (vollkommen, idealen) periodischen Struktur vorliegen können.

Weiterhin bevorzugt weist die erste Struktur eine periodische Struktur mit mindestens einer Periode im Bereich von 350 nm bis 2 µm auf.

Besonders bevorzugt weist die erste Struktur eine periodische Struktur mit mindestens einer Periode im Bereich von 360 - 750 nm bzw. 751 - 1300 nm auf. Weiterhin bevorzugt liegt eine Periode im Bereich von 350 nm bis 560 nm, 550 nm bis 750 nm, 751 nm bis 960 nm, 950 nm bis 1160 nm und/oder 1150 nm bis 1300 nm.

Bevorzugt weist die erste Struktur eine Gitterstruktur als periodische Struktur mit einer Periode von 360 nm bis 1300 nm auf.

Weiterhin bevorzugt weist die erste Struktur eine periodische Struktur mit einer Periodenanzahl von mehr als 3, mehr als 4, mehr als 5 oder mehr als 6 Perioden auf.

Weiter bevorzugt weist die erste Struktur als periodische Struktur im Wesentlichen ein Rechteck- oder Sinusprofil auf. Insbesondere ist unter der Begrifflichkeit "im Wesentlichen ein Rechteckprofil" bzw. "im Wesentlichen ein Sinusprofil" zu verstehen, dass das Rechteck- bzw. das Sinusprofil bedingt durch deren Herstellungsverfahren Abweichungen von einer (vollkommen, idealen) Rechteck- oder Sinusform aufweisen können.

Vorzugsweise werden die Geometrieparameter bzw. die Profilparameter der ersten Struktur und die Metallbeschichtung an der Grenzfläche so gewählt ist, dass für eine vorgegebene Wellenlänge und vorbestimmten Einfallswinkel bei TM-Polarisation Oberflächenplasmon-Polaritonen angeregt werden.

Vorzugsweise weist die zweite Struktur des mindestens einen zweiten Bereichs eine Reliefstruktur auf. Alternativ weist die zweite Struktur eine relieffreie Struktur auf. Eine relieffreie Struktur ist insbesondere eine nicht modulierte Fläche bzw. glatte Fläche.

Weiterhin vorzugsweise weist die zweite Struktur als Reliefstruktur eine diffraktive Struktur auf. Eine diffraktive Struktur kann beispielsweise ein Hologramm, ein Zero-Order-Device, eine Mottenaugenstruktur oder eine Mikrokavitätenstruktur sein. Mikrokavitäten sind beispielsweise in WO-2013/091858 beschreiben.

Weiterhin vorzugsweise weist die zweite Struktur als Reliefstruktur eine refraktive Struktur auf. Eine refraktive Struktur kann beispielsweise eine Mikrospiegelanordnung oder eine Mikrolinsenanordnung sein.

Weiterhin vorzugsweise umfasst das Verfahren: Festlegen/Berechnen der Geometrieparameter der ersten Struktur basierend auf einer vorgegebenen elektromagnetischen Strahlung bzw. Laserstrahlung mit der Wellenlänge λ (den Wellenlängen λ), (mindestens) eines vorgegebenen Einfallswinkels *Θ₀* und der Formel *k_{SP} = k_{Photon} sin Θ₀* ± *n_{V}* G mit G *= 2π*/*d,* wobei
*k_{SP}* der Wellenvektor der Oberflächenplasmon-Polaritonen,
*k_{Photon}* der Wellenvektor des auf die Metallschicht einfallenden Photons,
*Θ₀* der Einfallswinkel der auf die Metallschicht treffenden elektromagnetischen Strahlung,
*n_{V}* ein ganzzahliges Vielfaches,
G der reziproke Gittervektor und
d die Periode der ersten Struktur ist.

Weiterhin gilt *k_{SP} > k_{Photon}* mit *k_{Photon}=2π*/*λ.* Insbesondere kann das ganzzahlige Vielfache *n_{V}* als Kopplungsstärke angesehen werden.

In anderen Worten kann die erste Struktur basierend auf einer elektromagnetischen Strahlung einer vorgegebenen Wellenlänge λ und eines vorgegebenen Einfallswinkels *Θ₀* festgelegt bzw. bestimmt werden. Insbesondere kann die erste Struktur unter zusätzlicher Berücksichtigung einer geforderten Kopplungsstärke *n_{V}* festgelegt werden. Die erste Struktur ist vorzugsweise ein periodisches Gitter mit dem reziproken Gittervektor G.

Die Kopplungsstärke *n_{V}* hängt insbesondere von der Geometrie der ersten Struktur/des Gitterquerschnitts der ersten Struktur und der optischen Materialparameter ab. Die optischen Materialparameter sind insbesondere die optischen Materialparameter der Metallschicht oder zusätzlich des Trägersubstrats/ Dielektrikums und/oder weiterer Schichten. Insbesondere wird die Kopplungsstärke *n_{V}* durch die rigorose Lösung der Maxwell-Gleichungen berechnet.

Vorzugsweise umfasst das Verfahren einen oder mehrere der Schritte:
Festlegen/Vorgeben eines Trägersubstrats bzw. eines Brechungsindexes des Trägersubstrats; und/oder
Festlegen/Vorgeben optischer Materialparameter der Metallschicht;
   und/ oder
Auswählen eines Metalls/ Metalllegierung bzw. Materials für die Metallschicht;
Festlegen/Vorgeben der optischen Materialparameter des Trägersubstrats; und/oder
Festlegen/Vorgeben der Wellenlänge oder der Wellenlängen λ der elektromagnetischen Strahlung; und/oder
Festlegen/Vorgeben des Einfallswinkels *Θ₀*, unter welchem die elektromagnetische Strahlung auf die Metallschicht trifft; und/oder
Festlegen der Kopplungsstärke *n_{V}.*

Vorzugsweise kann einer oder mehrere der obigen Schritte ein Unterschritt des Verfahrensschrittes "Festlegen der Geometrieparameter der ersten Struktur..." sein.

Weiterhin vorzugsweise umfasst das Verfahren: Bestrahlen der Metallschicht mit elektromagnetischer Strahlung, wobei zwischen der Wellenlänge bzw. den Wellenlängen λ und der Periode d der ersten Struktur folgender Zusammenhang besteht λ ≈ d * n, wobei n der Brechungsindex des Trägersubstrats bzw. Dielektrikums an der Grenzfläche zur Metallschicht ist.

Weiterhin vorzugsweise umfasst das Verfahren: Bestrahlen der Metallschicht mit elektromagnetischer Strahlung aus einem Wellenlängenbereich von 400 nm bis 2000 nm.

Bevorzugt liegt die elektromagnetische Strahlung in einem Wellenlängenbereich von 350 nm bis 650 nm, 651 nm bis 950 nm, 951 nm bis 1250 nm, 1251 nm bis 1550 nm, 1551 nm bis 1850 nm oder 1851 nm bis 2000 nm. Besonders bevorzugt liegt die elektromagnetische Strahlung in einem Wellenlängenbereich von 1000 nm bis 1100 nm oder von 500 nm bis 550 nm. Weiterhin bevorzugt liegt die elektromagnetische Strahlung in einem Wellenlängenbereich zwischen 2000 nm und 3000 nm und/oder deren Frequenzverdoppelten und/oder deren Frequenzverdreifachten.

Weiterhin vorzugsweise umfasst das Verfahren: Bestrahlen der Metallschicht mit einem Strahl elektromagnetischer Strahlung unter einem Einfalls-/Einfallswinkel zwischen 0° bis 10° bezogen auf eine Normale/Senkrechte zu der von der ersten Struktur aufgespannten Ebene, auf die Metallschicht trifft. Vorzugsweise liegt der Einfallswinkel zwischen 0,5° und 5°, besonders bevorzugt zwischen 0,5°und 3°.

Weiterhin vorzugsweise umfasst das Verfahren: Bestrahlen der Metallschicht mit einem Strahl elektromagnetischer Strahlung, aufweisend eine Strahldivergenz mit einem Divergenzwinkel von kleiner 10°.

Vorzugsweise weist der Strahl der elektromagnetischen Strahlung eine Strahldivergenz mit einem Divergenzwinkel von kleiner 10° in einer Richtung normal/ senkrecht zur Einfallsebene bzw. Einstrahlebene auf.

Insbesondere vorzugsweise weist der Strahl der elektromagnetischen Strahlung eine Strahldivergenz mit einem Divergenzwinkel von kleiner als 5°, weiter bevorzugt kleiner als 3°, besonders bevorzugt kleiner als 0,5° in Richtung (parallel zu) der Einfallsebene bzw. Einstrahlebene auf.

Weiterhin vorzugsweise umfasst das Verfahren: Bestrahlen der Metallschicht mittels gepulster elektromagnetischer Strahlung, wobei die gepulste elektromagnetische Strahlung vorzugsweise eine Pulslänge von 1 ns bis 500 ns, bevorzugt 5 ns bis 200 ns, besonders bevorzugt 10 ns bis 100 ns aufweist, vrzugsweise 20 ns bis 60 ns, weiter bevorzugt 35 ns bis 45 ns oder 40 ns.

Vorteilhafterweise fördert eine Bestrahlung mittels gepulster elektromagnetischer Strahlung, dass durch die Anregung von OPPs ein Wärmeeintrag im ersten Bereich stattfindet. Dieser Wärmeeintrag wird jedoch nicht über Wärmeleitung oder -strahlung abgeführt, sondern führt zu einem Entfernen/ Ablation des Metalls.

Weiterhin vorzugsweise umfasst das Verfahren: Polarisieren des Strahls elektromagnetischen Strahlung, so dass die Metallschicht mit TM-polarisierter Strahlung bestrahlt wird.

Bei einer TM-polarisierten (transversal magnetischen) Welle schwingt der elektrische Feldvektor parallel zur Einfallsebene. TM-polarisierte Strahlung kann an einer Grenzfläche zwischen einem Metall und einem Dielektrikum OPPs anregen. Insbesondere kann eine solche Anregung an einer Grenzfläche Metallschicht-Dielektrikum eines metallischen Gitters stattfinden. Vorteilhafterweise bildet das (dielektrische) Trägersubstrat mit der ersten Struktur und der Metallschicht eine solche Dielektrikum-Metall-Grenzschicht eines metallischen Gitters aus. Diese Anregung von OPPs führt zur Absorption eines hohen Anteils des einfallenden Lichtes und geht in Wärme über. Bei Verwendung von kurzen Laserpulsen als Strahlquelle kann der Wärmeeintrag so hoch werden, dass dabei die Metallschicht von der ersten Struktur entfernt wird. In anderen Worten wird die metallische Gittergrenzfläche entfernt, d.h. das Metall des metallischen Gitters. Bei einer Verwendung von unpolarisierter Strahlung ist der Anteil der resonanten Lichtabsorption reduziert, da unpolarisierte Strahlung nur einen Anteil TM-polarisierter Strahlung enthält. Dieser verringerte Anteil reduziert den optischen Kontrast zwischen den Bereichen, in denen resonante Lichtabsorption stattfindet, und den Bereichen, in denen keine OPPs angeregt werden.

Weiterhin vorzugsweise umfasst das Verfahren: Bestrahlen der Metallschicht mit Laserstrahlung.

Weiterhin vorzugsweise umfasst das Verfahren: Bestrahlen der Metallschicht mit Laserstrahlung als elektromagnetischer Strahlung mit einem Top-Hatförmigen Strahlquerschnitt.

Weiterhin vorzugsweise umfasst das Verfahren: Fokussieren des Strahls elektromagnetischer Strahlung, so dass die elektromagnetische Strahlung in einer Fokusebene fokussiert vorliegt, die parallel zu der von der ersten Struktur aufgespannten Ebene liegt.

In anderen Worten soll die elektromagnetische Strahlung fokussiert auf die Metallschicht bzw. auf die erste Struktur treffen, um eine Anregung von OPPs zu erreichen. D.h. die elektromagnetische Strahlung trifft vorzugsweise fokussiert auf die Grenzfläche der Metallschicht und der ersten Struktur. Nachdem in jedem Bereich des Schichtelements die gleichen Einstrahlbedingungen bzw. Einfallsbedingungen erfüllt sein sollen, ist eine Fokussierung der elektromagnetischen Strahlung auf eine Fokusebene vorteilhaft.

Weiterhin vorzugsweise umfasst das Verfahren: Ablenken des Strahls elektromagnetischer Strahlung, um die elektromagnetische Strahlung über einen Bereich zu führen, der größer als der Strahlquerschnitt ist, so dass eine Bestrahlung mittels elektromagnetischer Strahlung in jedem Punkt eines zu bestrahlenden Bereichs erfolgen kann.

Weiterhin vorzugsweise umfasst das Verfahren: Transportieren des Schichtelements mittels einer Transporteinrichtung, so dass das Schichtelement in eine Bestrahlungszone hineingeführt und nach dem Schritt des Entfernens aus der Bestrahlungszone herausgeführt wird.

Vorzugsweise wird das Schichtelement mit gleichbleibender Geschwindigkeit durch die Bestrahlungszone geführt.

Weiterhin vorzugsweise umfasst das Verfahren, dass das Schichtelement derart bestrahlt wird, dass die Laserstrahlung (zuerst) auf eine Grenzfläche von Metallschicht und Luft trifft. Alternativ oder zusätzlich umfasst das Verfahren, dass das Schichtelement derart bestrahlt wird, dass die Laserstrahlung auf eine Grenzfläche von Metallschicht und einer dielektrischen Schicht trifft. Insbesondere kann die dielektrische Schicht das Trägersubstrat sein oder zumindest der erste Bereich des Trägersubstrats sein. Weiterhin kann die dielektrische Schicht eine Schicht sein, die an der Fläche der Metallschicht angeordnet ist, die dem Trägersubstrat gegenüberliegt.

Weiterhin vorzugsweise umfasst das Verfahren, dass das Schichtelement derart bestrahlt wird, dass die Laserstrahlung zuerst auf das Trägersubstrat trifft bevor es auf die Metallschicht trifft oder die Laserstrahlung zuerst auf die Metallschicht trifft.

In anderen Worten kann das Bestrahlen der Metallschicht "direkt" oder "indirekt" stattfinden. Beispielsweise liegt eine direkte Bestrahlung der Metallschicht vor, wenn die Metallschicht die erste Schicht des Schichtelements ist, die bestrahlt wird. Hingegen liegt eine indirekte Bestrahlung der Metallschicht vor, wenn zuerst andere Schichten des Schichtelements bestrahlt werden, bevor die elektromagnetische Strahlung auf die Metallschicht trifft. Dieser Fall liegt beispielsweise vor, wenn die elektromagnetische Strahlung zuerst das Trägersubstrat durchdringt und dann auf die Metallschicht trifft. Vorteilhafterweise ist dies eine bevorzugte Variante der Bestrahlung, da hierbei eine größere Toleranz gegenüber dem einzuhaltenden Einfallswinkel des einfallenden Lichts auf das Schichtelement bzw. die Metallschicht vorliegt.

Ein weiterer Aspekt betrifft ein Schichtelement zum partiellen Demetallisieren einer Metallschicht des Schichtelements. Insbesondere betrifft dieser Aspekt ein Schichtelement, umfassend
ein Trägersubstrat mit einer Fläche, die mindestens einen ersten und einen zweiten Bereich aufweist,
wobei der erste Bereich eine erste Struktur aufweist, die von einer zweiten Struktur des zweiten Bereichs verschieden ist,
die erste Struktur ein Aspektverhältnis von kleiner 0,3 aufweist, und
mindesten eine auf der Fläche des Trägersubstrats angeordnete Metallschicht,
wobei die Metallschicht durch Anregung von Oberflächenplasmon-Polaritonen mittels elektromagnetischer Strahlung von der Fläche des Trägersubstrats in dem ersten Bereich mit der ersten Struktur entfernbar ist/ entfernt ist.

Vorzugsweise umfasst das Schichtelement
ein Trägersubstrat mit einer Fläche, die mindestens einen ersten Bereich aufweist,
wobei der erste Bereich eine erste Struktur aufweist,
die erste Struktur ein Aspektverhältnis von kleiner 0,3 aufweist, und eine auf der Fläche des Trägersubstrats angeordnete Metallschicht,
wobei die Metallschicht durch Anregung von OPPs mittels elektromagnetischer Strahlung von der Fläche des Trägersubstrats in dem ersten Bereich mit der ersten Struktur entfernbar ist/ entfernt ist.

Die erste Struktur ist eine festgelegte bzw. vorgegebene Struktur, insbesondere eine Oberflächenstruktur bzw. Grenzflächenstruktur. Die zweite Struktur ist ebenfalls eine festgelegte Struktur, insbesondere eine Oberflächenstruktur bzw. Grenzflächenstruktur, die jedoch von der ersten Struktur verschieden ist.

Weiterhin bevorzugt weist die erste Struktur ein Aspektverhältnis von kleiner 0,2, noch weiter bevorzugt von kleiner 0,1 auf. Weiters bevorzugt weist die erste Struktur ein Aspektverhältnis zwischen 0,01 und 0,3 auf. Noch weiter bevorzugt weist die erste Struktur ein Aspektverhältnis zwischen 0,02 und kleiner 0,3 auf. Besonders bevorzugt weist die erste Struktur ein Aspektverhältnis von 0,01 bis 0,2 auf oder von 0,01 bis 0,1 oder von 0,02 bis 0,1.

Weiterhin vorzugsweise ist die Metallschicht im zweiten Bereich nicht durch die Anregung von OPPs entfernbar, die zum Entfernen der Metallschicht im ersten Bereich aufgrund der ersten Struktur beitragen bzw. führen.

Vorzugsweise sind im zweiten Bereich aufgrund der Verschiedenheit der zweiten Struktur von der ersten Struktur keine OPPs anregbar, die zum Entfernen der Metallschicht im zweiten Bereich führen, wenn im ersten Bereich OPPs angeregt werden, die zum Entfernen der Metallschicht im ersten Bereich führen.

Weiterhin vorzugsweise weist die erste Struktur eine Reliefstruktur mit einer eindimensional periodischen Struktur oder einer zweidimensional periodischen Struktur auf.

Weiterhin vorzugsweise weist die erste Struktur eine periodische Struktur mit einer Periode im Bereich von 350 nm bis 2 µm auf.

Weiterhin bevorzugt weist die erste Struktur eine periodische Struktur mit einer Periodenanzahl von mehr als 3, mehr als 4, mehr als 5 oder mehr als 6 Perioden auf.

Weiterhin vorzugsweise weist die erste Struktur als periodische Struktur im Wesentlichen ein Rechteck- oder Sinusprofil auf.

Weiterhin vorzugsweise weist die zweite Struktur des mindestens einen zweiten Bereichs eine Reliefstruktur, die von der ersten Struktur verschieden ist, oder eine relieffreie Struktur auf. Weiterhin vorzugsweise weist die zweite Struktur als Reliefstruktur diffraktive oder refraktive Strukturen auf, insbesondere Mottenaugen, Mikrokavitäten, Hologramme, Mikrospiegel oder Mikrolinsen.

Weiterhin vorzugsweise weist das Trägersubstrat dielektrisches Material auf. Vorzugsweise weist das Trägersubstrat eine Prägeschicht auf, welche die erste bzw. die zweite Struktur aufweist.

Vorzugsweise weist die Metallschicht eine Schichtdicke von10 nm bis 200 nm auf. Weiterhin bevorzugt weist die Metallschicht eine Schichtdicke von 20 nm bis 80 nm auf. Insbesondere weist die Schichtdicke im ersten Bereich eine Schichtdicke von 30 nm bis 60 nm und/oder 50 nm bis 70 nm bzw. 60 nm bis 80 nm auf. Besonders bevorzugt weist die Metallschicht eine Schichtdicke von 30 nm bis 80 nm auf.

Weiterhin vorzugsweise weist die Metallschicht zumindest eines der Materialien Al, Ag, Cu oder Cr auf. Weiterhin sind an der Metallschicht eine oder mehrere weitere Schichten wie Metallschichten oder dielektrische Schichten angeordnet. Beispielsweise kann die Metallschicht eine Schicht eines Colorshift-Aufbaus sein. Weiterhin kann die Metallschicht eine Legierung sein.

Insbesondere weist das Schichtelement eine oder mehrere Merkmale auf, wie sie zum ersten Aspekt erläutert wurden. Vorzugsweise umfasst das Schichtelement ein oder mehrere Merkmale, die aus der Ausführung einer oder mehrerer der zum ersten Aspekt erläuterten Verfahrensschritte resultieren. Entsprechend treffen die erläuterten Ausführungen und Ausgestaltungen zum Schichtelement bezüglich seiner Herstellung in analoger Weise auf die Struktur des Schichtelements zu.

Ein weiterer Aspekt betrifft ein Sicherheitselement, basierend auf einem Schichtelement wie zu den vorangegangenen Aspekten beschrieben, wobei das Schichtelement mindestens einen ersten und einen zweiten Bereich und eine partiell auf der Fläche des Trägersubstrats angeordnete Metallschicht aufweist, wobei die Metallschicht aufgrund der ersten Struktur des ersten Bereichs und durch Anregung von Oberflächenplasmon-Polaritonen von der Fläche des Trägersubstrats im ersten Bereich mit der ersten Struktur entfernt ist.

Ein Sicherheitselement gemäß dieser Erfindung kann insbesondere eine Folie oder ein mehrschichtiges Substrat beinhalten, wobei das mehrschichtige Substrat auch eine Kombination aus Gewebesubstraten und Folien aufweisen kann. Das Sicherheitselement kann beispielsweise einen Fensterbereich aufweisen, welcher dazu dient, ein Loch in einem Wertdokument bzw. im Papiersubstrat des Wertdokuments zu füllen.

Das Sicherheitselement kann beispielsweise mittels Klebeverbindungen mit dem Wertdokumentsubstrat verbunden werden. Alternativ oder zusätzlich kann das Sicherheitselement papiermacherisch, z.B. als Sicherheitsfaden in das Wertdokumentsubstrat eingebettet werden.

Ein weiterer Aspekt betrifft ein Wertdokument, insbesondere Banknote, umfassend ein Wertdokumentsubstrat und mindestens ein mit dem Wertdokumentsubstrat verbundenes Sicherheitselement, welches ein oder mehrere Merkmale, wie zu den vorhergehenden Aspekten erläutert, aufweist.

Ein weiterer Aspekt betrifft eine Vorrichtung zum partiellen Demetallisieren eines Schichtelements, umfassend:
eine Lasereinrichtung zum Bestrahlen eines Schichtelements mit Laserstrahlung in einer Bestrahlungszone; und
eine Transporteinrichtung zum Transportieren des Schichtelements, wobei das Schichtelement
ein Trägersubstrat mit einer Fläche, die mindestens einen ersten und einen zweiten Bereich aufweist, wobei
der erste Bereich eine erste Struktur aufweist, die von einer zweiten Struktur des zweiten Bereichs verschieden ist, und
mindestens eine auf der Fläche des Trägersubstrats angeordnete Metallschicht umfasst; und
wobei die Lasereinrichtung ausgelegt ist, in der Bestrahlungszone Oberflächenplasmon-Polaritonen an der Metallschicht des Schichtelements anzuregen, so dass in dem ersten Bereich, der die erste Struktur aufweist, die Metallschicht entfernt wird.

Vorzugsweise umfasst die Vorrichtung
eine Lasereinrichtung zum Bestrahlen eines Schichtelements mit Laserstrahlung in einer Bestrahlungszone; und
eine Transporteinrichtung zum Transportieren des Schichtelements, wobei das Schichtelement
ein Trägersubstrat mit einer Fläche, die mindestens einen ersten Bereich aufweist, wobei
der erste Bereich eine erste Struktur aufweist, und mindestens eine auf der Fläche des Trägersubstrats angeordnete Metallschicht umfasst; und
wobei die Lasereinrichtung ausgelegt ist, in der Bestrahlungszone Oberflächenplasmon-Polaritonen an der Metallschicht des Schichtelements anzuregen, so dass in dem ersten Bereich, der die erste Struktur aufweist, die Metallschicht entfernt wird.

Die Lasereinrichtung ist insbesondere ausgelegt, in der Bestrahlungszone in Abhängigkeit von den festgelegten Geometrieparametern der ersten Struktur Oberflächenplasmon-Polaritonen an der Metallschicht des Schichtelements anzuregen. Insbesondere ist die Lasereinrichtung einstellbar/justierbar, um eine Bestrahlung in der Bestrahlungszone bereitzustellen, die auf die festgelegten Geometrieparametern eines Schichtelements gestimmt ist, so dass Oberflächenplasmon-Polaritonen an der Metallschicht des Schichtelements angeregt werden können, so dass in dem ersten Bereich, der die erste Struktur aufweist, die Metallschicht entfernt wird.

Vorzugsweise umfasst die Lasereinrichtung eine Strahlführungseinrichtung zum Führen der Laserstrahlung, die ausgelegt ist, die Laserstrahlung derart zu führen, dass eine Bestrahlung der Metallschicht des Schichtelements unter einem Einfallswinkel, der bezüglich der Normalen zu der von der ersten Struktur aufgespannten Ebene innerhalb der Einfallsebene zwischen 0° und 10°, vorzugsweise zwischen 1° und 5°, zwischen 0° und 3,5 oder zwischen 0° und 2° verkippt ist.

Der optimale Einfallswinkel ist durch die Geometrieparameter der ersten Struktur (Gitterparameter) im ersten Bereich und die verwendete Laserwellenlänge festgelegt/ vorgegeben. Bevorzugterweise liegt keine konische Strahlanordnung vor (klassische Gitterbeugung). Jedoch sind keine engen Toleranzen gegenüber eines Verkippens aus der Einfallsebene gefordert.

Vorzugsweise ist die Strahlführungseinrichtung ausgelegt, die Laserstrahlung über einen Bereich in der Bestrahlungszone zu führen, der größer als der Strahlquerschnitt der Laserstrahlung ist, so dass eine Bestrahlung mittels Laserstrahlung in jedem Punkt eines zu bestrahlenden Bereichs erfolgen kann.

Vorzugsweise ist die Strahlführungseinrichtung ausgelegt, die Laserstrahlung derart über den zu bestrahlenden Bereich zu führen, dass die Laserstrahlung in jedem Punkt des zu bestrahlenden Bereichs unter demselben vorgegebenen Einstrahl-/ Einfallswinkel(n) zur Anregung von OPPs einfällt.

Vorzugsweise werden in der großtechnischen Herstellung von Schichtelementen sogenannte Rolle-zu-Rölle-Verfahren angewandt. Dies bedeutet, dass typischerweise eine Vielzahl von Schichtelementen nebeneinander angeordnet sind und auf einer Rolle aufgewickelt sind. Zur Bearbeitung wird diese Rolle typischerweise kontinuierlich abgewickelt und so die Schichtelemente nacheinander sowie nebeneinander an der jeweiligen Bearbeitungszone, z.B. Bestrahlungszone, vorbeigeführt. Entsprechend werden in einer Bearbeitungszone viele Schichtelemente über einen breiten Bereich teilweise gleichzeitig, teilweise nacheinander bearbeitet. Daher ist es vorteilhaft, wenn in jedem Punkt eines zu bestrahlenden Bereichs dieselben Einfallsbedingungen vorliegen, z.B. die vorgegebenen Einfallswinkel eingehalten werden.

Vorzugsweise ist die Stahlführungseinrichtung ausgelegt, die Fokuslage an eine Fokusebene anzupassen, die parallel zu der von der ersten Struktur aufgespannten Ebene liegt.

Vorzugsweise weist die Stahlführungseinrichtung ein F-Theta-Objektiv und/oder einen 3D-Scanner und/oder ein telezentrisches F-Theta-Objektiv und/oder ein Polygonrad und/oder akkustooptische Modulatoren auf, um die Fokuslage anzupassen und/oder einen vorgegebenen Einfallswinkel bereitzustellen. Weiterhin vorzugsweise weist die Strahlführungseinrichtung eine Linienoptik auf. Der Laserstrahl hat dann die Form einer schmalen Linie, die die Breite des Bearbeitungsbereiches aufweist. Vorteilhafterweise muss der Laserstrahl dann nicht mehr abgelenkt werden. Beispielsweise kann eine Lasereinrichtung Laserstrahlung mit einer Leistung von 300 Watt bei einer Frequenz von 6 kHz aufweisen, wobei die Laserstrahlung die Form einer Linie mit den Maßen 0,3 mm (Länge) x 140 mm (Breite) aufweist. Beispielsweise könnte so ein Schichtelement mit einer Breite von 140 mm von einer solchen Lasereinrichtung bei einer Bahngeschwindigkeit von 100 m/min bearbeitet werden.

Vorzugsweise umfasst die Lasereinrichtung einen Polarisator, um TM-polarisierte Laserstrahlung bereitzustellen. Vorzugsweise weist die auf die Metallschicht treffende Laserstrahlung eine Strahldivergenz mit einem Divergenzwinkel von kleiner 10° in einer Richtung normal/senkrecht zur Einfallsebene auf.

Vorzugsweise weist die auf die Metallschicht treffende Laserstrahlung eine Strahldivergenz mit einem Divergenzwinkel von kleiner als 5°, weiters bevorzugt kleiner als 3° in Richtung der Einfallsebene auf. Besonders bevorzugt weist die Strahldivergenz einen Divergenzwinkel von kleiner 1°, noch weiter bevorzugt von 0,5° in Richtung (parallel zu) der Einfallsebene auf.

Vorzugsweise ist der Strahlquerschnitt der Laserstrahlung Top-Hat-förmig. Vorzugsweise emittiert die Lasereinrichtung gepulste Laserstrahlung, und wobei die gepulste Laserstrahlung vorzugsweise eine Pulslänge von 1 ns bis 500 ns, bevorzugt 5 ns bis 200 ns, besonders bevorzugt 10 ns bis 100 ns aufweist. Weiterhin vorzugsweise weist die Pulslänge eine Länge von 20 ns bis 60 ns, 35 ns bis 45 ns oder 40 ns auf.

Weiterhin vorzugsweise umfasst das Verfahren, dass das Schichtelement derart bestrahlt wird, dass die Laserstrahlung zuerst auf das Trägersubstrat trifft, bevor es auf die Metallschicht trifft oder die Laserstrahlung zuerst auf die Metallschicht trifft.
Vorzugsweise ist die Vorrichtung ausgelegt, das Schichtelement derart zu bestrahlen, dass die Laserstrahlung (zuerst) auf eine Grenzfläche von Metallschicht und Luft trifft oder auf eine Grenzfläche von Metallschicht und einer dielektrischen Schicht trifft. Die dielektrische Schicht kann das Trägersubstrat oder eine weitere dielektrische Schicht sein.
Vorzugsweise ist die Transporteinrichtung ausgelegt, das Schichtelement in die Bestrahlungszone hineinzuführen und nachdem die Metallschicht des Schichtelements durch Anregung von OPPs in dem ersten Bereich, der eine erste Struktur aufweist, entfernt wurde, aus der Bestrahlungszone herauszuführen.

Vorzugsweise ist die Lasereinrichtung ausgelegt, den ersten und den zweiten Bereich des Schichtelements nacheinander und/oder gleichzeitig mit Laserstrahlung zu bestrahlen, wobei die Metallschicht durch die mit Laserstrahlung angeregten OPPs nur in dem ersten Bereich entfernt wird, der die erste Struktur aufweist.

Vorzugsweise emittiert die Lasereinrichtung Laserstrahlung aus einem Wellenlängenbereich von 400 nm bis 2000 nm, vorzugsweise 500 nm bis 550 nm oder 1000 nm bis 1100 nm, weiter vorzugsweise 532 nm und/oder 1064 nm. Weiterhin vorzugsweise liegt die Laserstrahlung in einem Wellenlängenbereich von 2000 bis 3000 nm und/oder deren Frequenzverdoppelten und/oder deren Frequenzverdreifachten.

Vorzugsweise entspricht die Wellenlänge(n) λ der Laserstrahlung ungefähr dem Produkt aus Periode *d* und Brechungsindex *n* des Trägersubstrats an der Grenzfläche zur Metallschicht im ersten Bereich.

Insbesondere weist die Vorrichtung eine oder mehrere Einrichtungen bzw. Merkmale auf, um das Verfahren, wie es zum ersten Aspekt erläutert wurde, ausführen zu können. Entsprechend treffen die erläuterten Ausführungen und Ausgestaltungen zum Verfahren sowie zum Schichtelement bezüglich seiner Herstellung in analoger Weise auf die hierfür erforderliche Ausgestaltung der Vorrichtung zu.

Die Erfindung wird nachstehend anhand von bevorzugten Ausführungsformen in Verbindung mit den beigefügten Figuren erläutert, bei deren Darstellung auf eine maßstabs- und proportionsgetreue Wiedergabe verzichtet wurde, um die Anschaulichkeit zu erhöhen.

Es zeigen:
- Fig. 1a: eine schematische Darstellung zur Anregung von Oberflächenplasmon-Polaritonen;
- Fig. 1b: eine schematische Darstellung zur Lichtwechselwirkung im k-Raum;
- Fig. 2: eine schematische Darstellung zur Bestrahlung eines Schichtelements mit TM-polarisierter Strahlung;
- Fig. 3a-c: schematische Darstellungen zur Bestrahlung eines Schichtelements;
- Fig. 4: ein Diagramm mit der Absorption als Funktion des Einfallswinkels für verschiedene Schichtdicken und bei TM-polarisierter Bestrahlung bei einem Schichtelement gemäß Fig. 3a;
- Fig. 5a, b: Simulationen der elektromagnetischen Nahfelder bei Anregung von OPPs bei einem Schichtelement gemäß Fig. 3a;
- Fig. 6: ein Diagramm mit der Absorption als Funktion des Einfallswinkels für verschiedene Schichtdicken und bei TM-polarisierter Bestrahlung bei einem Schichtelement gemäß Fig. 3b;
- Fig. 7a, b: Simulationen der elektromagnetischen Nahfelder bei Anregung von OPPs bei einem Schichtelement gemäß Fig. 3b;
- Fig. 8a, b: Diagramme bezüglich des Einflusses der Profilhöhe h auf die Reflexion sowie die Absorption eines Schichtelements gemäß den Figuren 6 bis 7b als Funktion des Einfallswinkels;
- Fig. 9a, b: Diagramme bezüglich des Einflusses der Schichtdicke t auf die Reflexion sowie die Absorption eines Schichtelements gemäß den Figuren 6 bis 7b als Funktion des Einfallswinkels;
- Fig. 10a, b: Diagramme bezüglich des Einflusses des für die Metallschicht verwendeten Materials auf die Reflexion sowie die Absorption eines Schichtelements gemäß den Figuren 6 bis 7b als Funktion des Einfallswinkels;
- Fig. 11a-c: Diagramme bezüglich des Absorptionsgrads als Funktion des Einfallswinkels bei TM-polarisierter Bestrahlung mit einer Wellenlänge von λ=532 nm gemäß Fig. 3a;
- Fig. 12: schematische Darstellung einer Vorrichtung zum partiellen Demetallisieren von Schichtelementen;
- Fig. 13: eine schematische Darstellung einer optischen Einheit;
- Fig. 14: eine schematische Darstellung einer Bestrahlungssituation eines Schichtelements;
- Fig. 15: eine schematische Darstellung einer Strahlführung einer Strahlführungseinrichtung;
- Fig. 16: einen schematischen Ausschnitt eines Wertdokuments in Aufsicht;
- Fig. 17: eine schematische Schnittansicht eines Schichtelements;
- Fig. 18: eine schematische Schnittansicht eines weiteren Schichtelements; und
- Fig. 19: eine schematische Darstellung eines Sicherheitselements in Aufsicht.

OPPs entstehen durch eine Wechselwirkung von elektromagnetischer Strahlung bzw. Licht an Metalloberflächen. Insbesondere können OPPs an glatten Metalloberflächen, aber auch rauen metallisierten Flächen, insbesondere an metallischen Reliefstrukturen auftreten. OPPs ist an die Metalloberfläche/Metallfläche gebundene elektromagnetische Strahlung/Licht, das sich entlang der Metallfläche ausbreitet und als Folge der Dämpfungskonstante k des Metalls absorbiert wird. Hierbei ist der komplexe Brechungsindex des Metalls durch ν_{M} = n+i*k definiert. Dabei ist die elektromagnetische Feldstärke an der Oberfläche bzw. Grenzfläche von Metallschicht und Dielektrikum wesentlich höher als bei freier Lichtausbreitung. Diese Feldkonzentration kann um Größenordnungen höher liegen als bei freier Lichtausbreitung. Die elektromagnetische Feldstärke fällt senkrecht zur Metalloberfläche exponentiell mit den Eindringtiefen δₘ und δ_{d} ab, wie dies beispielsweise in **Fig. 1a** schematisch dargestellt ist. Insbesondere zeigt Fig. 1a schematisch ein dielektrisches Trägersubstrat 100, welches sich im Bereich y>0 des Koordinatensystems befinden soll, sowie eine Metallschicht 102, die sich im Bereich y<0 des Koordinatensystems befinden soll. Die eingezeichneten E-Feldlinien sind mit dem Bezugszeichen 104 versehen.

Die Anregung von Oberflächenplasmon-Polaritonen erfolgt über den Anteil der elektromagnetischen Strahlung der TM- polarisiert ist. Denn nur eine senkrecht zur Metalloberfläche Orientierte Komponente des E-Feldes kann das Elektronengas im Metall zu Schwingungen anregen. Die Reichweite von Oberflächenplasmon-Polaritonen liegt in der Größenordnung von 10 µm bis100 µm und hängt in erster Linie von der Leitfähigkeit des Metalls ab.

Weiterhin muss bei dieser Wechselwirkung neben der Energieerhaltung auch das Gesetz der Impulserhaltung erfüllt sein. **Fig. 1b** veranschaulicht diesen Zusammenhang in einem sogenannten k-Raum Diagramm 108, das den Impulsraum wiederspiegelt. Aufgrund der Dispersion der OPPs gilt *k_{SP} > k_{Photon}*, wobei *k_{SP}* der Wellenvektor der OPPs und *k_{Photon}* der Wellenvektor des auf die Metallschicht einfallenden Photons ist. Daher erfolgt die Impulsanpassung günstigerweise durch die Wechselwirkung mit einer periodischen Struktur/metallischen Gitter und dem zugehörigen reziproken Strukturvektor G *= 2π*/*d*, wobei *d* die (Gitter-)Periode ist. Letztendlich ergibt sich die Formel *k_{SP} = k_{Photon} sin Θ₀* ± *n_{V} G*, wobei *n_{V}* ein ganzzahliges Vielfaches ist und als Kopplungsordnung bzw. Kopplungsstärke interpretiert/ bezeichnet wird. Dieser Zusammenhang bedeutet, dass OPPs aufgrund elektromagnetischer Strahlung einer bestimmten Wellenlänge und eines vorgegebenen Einfallswinkels angeregt werden. Die Kopplungsstärke hängt jedoch neben der Geometrie des Gitterquerschnitts/ der periodischen Struktur auch von den optischen Materialparametern ab und kann nur durch die rigorose Lösung der Maxwell-Gleichungen berechnet werden. Flache (Oberflächen-)Strukturen bzw. Grenzflächenstrukturen eignen sich besonders gut für die Anregung von OPPs. Bei der Anregung von OPPs an flachen (Oberflächen-)Strukturen, z.B. periodischen Reliefstrukturen mit einem Aspektverhältnis von kleiner 0,3, kann die einfallende elektromagnetische Strahlung vollständig absorbiert werden, d.h. der Reflexionsgrad eines ansonsten reflektierenden Metalls sinkt auf null.

Beispielsweise kann eine (periodische) Struktur ein Profil aufweisen, dessen Struktur-/Profiltiefe nur ein 2/100-tstel der Periode der Struktur beträgt. Somit würde für einen Betrachter die metallisierte (Oberflächen-)Struktur bei Beleuchtung mit Licht im sichtbaren Bereich - also ohne dass OPPs angeregt werden - annähernd wie ein glatter Spiegel erscheinen. Erst durch Anregung von Oberflächenplasmon-Polaritonen wird eine Absorption des einfallenden Lichts erreicht.

Zur allgemeinen Information über OPPs wird beispielhaft auf folgende Literaturquellen verwiesen:
H. Raether, "Surface plasmons on gratings: Surface Plasmons on Smooth and Rough Surfaces", Springer (1988);
Hutley, M. C., and D. Maystre, "The total absorption of light by a diffraction grating," Opt. Commun. 19, 431-436 (1976), und
H. Lochbihler, Phys. Rev. B 53, 10289 (1996).

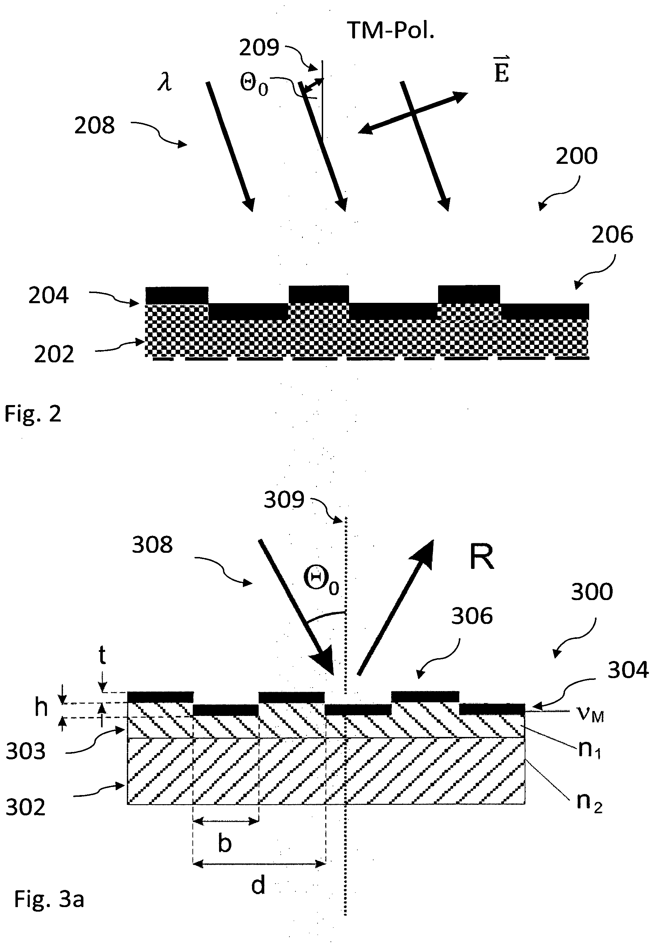

In Fig. 2 ist ein Schichtelement 200 mit einem Trägersubstrat 202 und einer (ersten) Struktur (Oberflächenstruktur/Grenzflächenstruktur) 204, die einem Rechteckprofil entspricht, gezeigt, wobei die Struktur 204 mit einer Metallschicht 206 bedeckt ist. In anderen Worten bilden die erste Struktur des Trägersubstrats und die Metallschicht ein metallisches Gitter. Das Trägersubstrat 202 ist dielektrisch. Wie schematisch angedeutet, wird diese (Oberflächen-)Struktur mit TM-polarisierter elektromagnetischer Strahlung 208 (Licht) der Wellenlänge λ und unter einem Einfallswinkel Θ₀ bestrahlt. Der Einfallswinkel ist auf eine Normale 209 zu der von der Struktur 204 aufgespannten Ebene bezogen. Wenn die zuvor beschriebenen Bedingungen für die Impulserhaltung erfüllt sind, können OPPs an der Grenzfläche, die durch die Struktur 204 und Metallschicht 206 gebildet wird, angeregt werden. Diese Anregung hat zur Folge, dass ein großer Anteil der einfallenden elektromagnetischen Strahlung 208 im Metall der Metallschicht 206 absorbiert wird. Im vorliegenden Fall ist das Trägersubstrat 202 eine Trägerschicht, nämlich eine Prägelackschicht.

Vorteilhafterweise ist diese Strahlungsabsorption bei höhenmodulierten Strukturen/ Reliefstrukturen wesentlich höher als im Vergleich zu glatten Metalloberflächen/ Metallflächen. Diese Strahlungsabsorption ist beispielsweise über eine verminderte Reflexion bzw. Transmission der einfallenden Strahlung nachweisbar. Die absorbierte Strahlung wird in Wärme im Metall umgewandelt. Bei sehr hohem Wärmeeintrag durch OPPs kommt es zum Entfernen/ Ablation des Metalls.

Im Falle der in Fig. 2 dargestellten Metallschicht 206 wird die Metallschicht 206 durch die Einkopplung des Lichtes 208 mittels Anregung von OPPs entfernt bzw. abgetragen. Vorteilhafterweise wird die dielektrische Trägerstruktur 202 durch die Anregung von OPPs bzw. durch den Wärmeeintrag nicht merklich verändert.

**Figuren 3a bis 3c** zeigen schematische Darstellungen zur Bestrahlung eines Schichtelements 300 in der Schnittansicht. Das Schichtelement 300 umfasst einen dielektrischen Trägerfilm 302 und eine Prägelackschicht 303 sowie eine Metallschicht 306. Der Trägerfilm 302 und die Prägelackschicht 303 bilden ein Trägersubstrat. Die Prägelackschicht 303 ist moduliert, d.h. die Prägelackschicht weist eine (erste) Struktur (Oberflächenstruktur) 304 auf. Auf der Fläche der Prägelackschicht 303, d.h. auf der (ersten) Struktur 304, ist die Metallschicht 306 aufgedampft bzw. aufgebracht. Die Struktur 304 weist ein periodisches Rechteckprofil als Struktur auf.

Das Schichtelement 300 ist durch folgende geometrische Parameter charakterisiert: Periode d (doppelte Strukturbreite) der Struktur 304, Strukturtiefe h, Breite b der Struktur 304 und die Schichtdicke t der Metallschicht. Das Schichtelement 300 ist weiterhin durch folgende optische Konstanten charakterisiert: komplexer Brechungsindex ν_{M} der Metallschicht 306, Brechungsindex n₁ der Prägelackschicht und Brechungsindex n₂ des Trägerfilms. Der Einfallswinkel Θ₀ wird durch die Richtung des einfallenden Lichtes 308/ einfallende Strahlung in der Einfallsebene und der Normalen 309 zu der von der Struktur 304 aufgespannten Ebene gebildet.

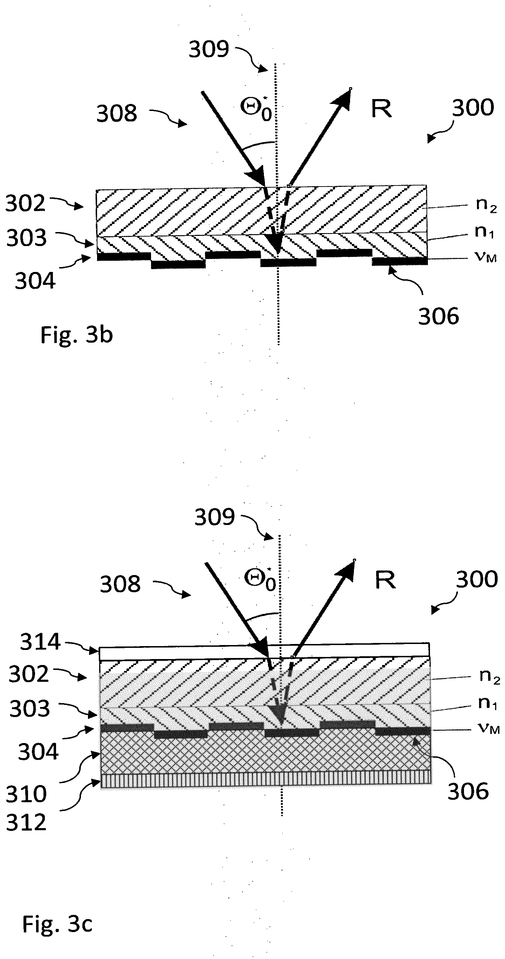

Das Schichtelement 300 in Fig. 3a unterscheidet sich von der Darstellung in 3b dadurch, dass es vertikal gespiegelt ist. Folglich wird die Metallschicht 306 in den Figuren 3a und 3b Unterschiedlich bestrahlt. In Fig. 3a wird eine Situation gezeigt, in der die Metallschicht 306 direkt beleuchtet wird. In anderen Worten trifft bei der Bestrahlung des Schichtelements 300 das einfallende Licht 308 zuerst/direkt auf die Metallschicht 306. In anderen Worten befindet sich auf der Seite des einfallenden Lichts 308 ein Medium mit dem Brechungsindex 1 (=Luft). Somit trifft das einfallende Licht 308 auf die Grenzfläche von Luft und Metallschicht 306.

Hingegen wird in Fig. 3b eine Situation gezeigt, in der die Metallschicht 306 indirekt beleuchtet wird. In anderen Worten durchdringt die eingestrahlte Strahlung 308 zuerst das Trägersubstrat, d.h. Trägerfilm 302 und Prägelackschicht 303, bevor die einfallende Strahlung/Licht 308 auf die Metallschicht 306 trifft. In anderen Worten befindet sich ein Medium mit dem Brechungsindex > 1 (= Prägelack) auf der Seite des einfallenden Lichts 308. Somit trifft das einfallende Licht 308 auf das Medium Prägelackschicht 303 bevor es auf die Grenzfläche von Metallschicht 306 und Prägelackschicht 303 trifft.

Bei einer Ausführung bzw. Bestrahlung gemäß Fig. 3b ist zu berücksichtigen, dass die Strahlung bei Durchtritt durch den Trägerfilm 302 mit dem Brechungsindex n₂ sowie an der Prägelackschicht 303 mit dem Brechungsindex n₁ gebrochen wird. Angenommen die Brechungsindizes von Prägelackschicht 303 und Trägerfilm 302 sind gleich, dann berechnet sich der Einfallswinkel Θ₀ an der Metallschicht 306 durch das Snell'sche Gesetz:
*n₀ sin Θ*₀ *= n*₂ *sin Θ*₂*.* Sollten sich die Brechungsindizes von Prägelackschicht 303 und Trägerfilm 302 unterscheiden, müsste für die Berechnung des Einfallswinkels an der Metallschicht 306 auch noch die Brechung der einfallenden Strahlung am Übergang von Prägelackschicht 303 und Trägerfilm 302 durch Anwendung dieser Formel berücksichtigt werden. Weiterhin verändert sich auch die Wellenlänge der eingestrahlten Strahlung im dielektrischen Trägersubstrat. Daher verschiebt sich in diesem Fall die Resonanzcharakteristik des Schichtelements um den Faktor des Brechungsindexes in den langwelligen Bereich.

Fig. 3c weist im Vergleich zu den Ausführungen gemäß der Figuren 3a und 3b eine weitere Schicht auf, nämlich die Schicht 310. Die Schicht 310 ist eine dielektrische Schicht. Eine Bestrahlung des Schichtelements 300 bei einem Aufbau gemäß Fig. 3c kann wie gezeigt erfolgen, in dem das Schichtelement 300 bzw. die Metallschicht 306 von der Seite der Prägelackschicht 303 bestrahlt wird. Alternativ oder zusätzlich kann eine Bestrahlung von der Seite der Schicht 310, nicht gezeigt, erfolgen. Insbesondere kann das Schichtelement 300 weitere Schichten aufweisen, wie die Schichten 312, 314, die an dem Trägerfilm 302 und/oder an der Schicht 310 angeordnet sind, so dass die Metallschicht 306 von mehreren Schichten eingeschlossen ist bzw. zwischen mehreren Schichten eingebettet ist. Selbstverständlich ist der Einfallswinkel Θ₀, wie er in Fig. 3c eingezeichnet ist, nicht korrekt eingezeichnet, wenn die weitere Schicht 314 vorhanden ist. In diesem Fall müsste der Einfallswinkel Θ₀ in analoger Weise, wie zu Figur 3b beschrieben, unter Verwendung des Snell'schen Gesetzes berechnet werden.

Im Fall einer Bestrahlung gemäß Fig. 3c wird die Metallschicht 306 vorzugsweise durch Umwandlung entfernt. Ist die Metallschicht 306 beispielsweise eine Aluminiumschicht, so kann durch Bestrahlen mittels des einfallenden Lichts 308 die Aluminiumschicht in ein Aluminiumoxid umgewandelt werden. Vorzugsweise erscheint eine derart umgewandelte Metallschicht 306 für einen Betrachter transluzent/transparent.

Im Folgenden wird die Anregung von OPPs für (Oberflächen-)Strukturen bei einer Bestrahlung mit Strahlung vorgegebener Wellenlänge und TM-Polarisation diskutiert. Hierzu wurde die Absorption bzw. die Reflexion für unterschiedliche Anordnungen gemäß der Maxwell'schen Gleichungen rigoros berechnet.

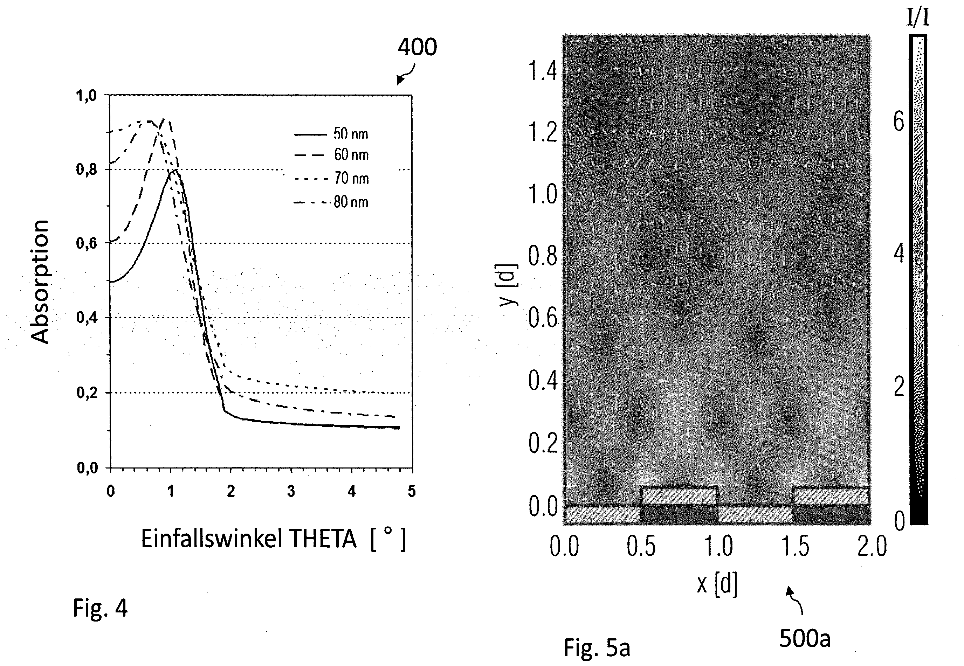

**Fig. 4** zeigt ein Diagramm 400, welches die Absorption als Funktion des Einfallswinkels für die Schichtdicken t= 50 nm, t= 60 nm, t= 70 nm und t= 80 nm bei TM-polarisiertem Lichteinfall/Bestrahlung veranschaulicht. Das Diagramm 400 beruht auf einem Schichtelement und einer Einfallssituation, wie in Fig. 3a gezeigt. Weiterhin liegen dem Diagramm folgende Werte zugrunde:
Bestrahlung mit einer Strählung der Wellenlänge λ=1064 nm
d=1030 nm (Periode der Struktur 304)
b=515 nm (Breite der Struktur 304)
h=60 nm (Strukturtiefe der Struktur 304)
m=1,52 (Brechungsindex der Prägelackschicht 303)
Metallschicht: aufgedampftes Aluminium
Wie aus Fig. 4 ersichtlich ist, zeigen alle Spektren ein ausgeprägtes Maximum der Absorption für den Winkel Θ₀ ∼ 1°. Bei diesem Einfallswinkel werden OPPs angeregt und mehr als 80% des einfallenden Lichts absorbiert. Besonders günstig für die Demetallisierung erscheinen die Schichtdicken 60 nm bis 80 nm.

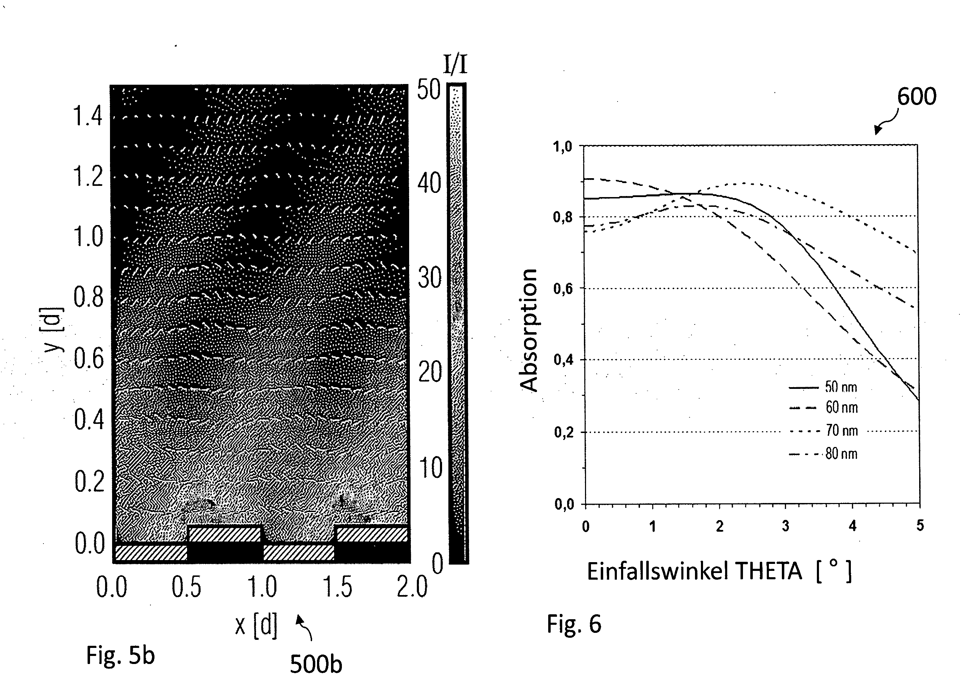

**Figuren 5a** **und** **5b** zeigen jeweils eine Simulation 500a, 500b der elektromagnetischen Nahfelder bei Anregung von OPPs bei einem Schichtelement gemäß Figuren 3a und 4. Die Simulationen 500a, 500b zeigen sowohl den Energiefluss (Poynting-Vektor) als auch die Intensität für das oben angegebene Beispiel eines Schichtelements gemäß Fig. 4 mit einer Schichtdicke t =60 nm der Metallschicht aus Aluminium. In Fig. 5a ist eine Bestrahlungssituation simuliert, bei der eine Bestrahlung senkrecht zu der Struktur (Oberflächenstruktur) 304 bzw. der Metallschicht 306 stattfindet. In Fig. 5b ist eine Bestrahlungssituation simuliert, bei eine Bestrahlung unter einem Einfallswinkel Θ₀=0.9° stattfindet.

Die x und y-Koordinaten der Simulation 500a und 500b sind auf die Periode d normiert. Die Pfeile repräsentieren die Richtung des lokalen Energieflusses und die Pfeillänge den Logarithmus seines Betrags.

Bei senkrechter Bestrahlung, wie in Fig. 5a, entstehen Wirbel im Energiefluss in der Nähe der metallisierten (Oberflächen-)Struktur. Die elektromagnetische Feldstärke ist an der Oberfläche/Fläche etwa 6x höher als im Fernfeld. Die Feldverteilung ändert sich dramatisch, wenn nun das Gitter/ erste Struktur um 0.9° gekippt wird. Die Intensität an der Metallschicht 306 erhöht sich auf den Faktor 50. Ein hoher Energiefluss breitet sich entlang der Struktur 304 bzw. der Metallschicht 306 aus. Diese angeregten OPPs werden aufgrund der Wechselwirkung mit der Metallschicht 306 gedämpft und schließlich absorbiert. So geht das einfallende Licht über die Anregung der OPPs an der Metallschicht 306 in Wärme über.

Fig. 6 zeigt ein Diagramm 600, welches die Absorption als Funktion des Einfallswinkels für die Schichtdicken t= 50 nm, t= 60 nm, t= 70 nm und t= 80 nm bei TM-polarisiertem Lichteinfall/ Bestrahlung darstellt. Das Diagramm 600 beruht auf einem Schichtelement und einer Einfallssituation, wie in Fig. 3b gezeigt. Weiterhin liegen dem Diagramm 600 folgende Werte zugrunde:
Bestrahlung mit einer Strahlung der Wellenlänge λ=1064 nm
d=660 nm (Periode der Struktur 304)
b=330 nm (Breite der Struktur 304)
h=60 nm (Strukturtiefe der Struktur 304)
n₁=1,52 (Brechungsindex der Prägelackschicht 303)
Metallschicht: aufgedampftes Aluminium

Wie aus dem Diagramm 600 ersichtlich ist, zeigen alle Spektren ein Maximum der Absorption für einen Winkelbereich Θ₀ von 0° bis 3°. Bei diesen Einfallswinkeln findet die Anregung von OPPs statt, wobei etwa 80% des einfallenden Lichts absorbiert wird. Für zunehmende schräge Einfallswinkel nimmt die Lichtabsorption stark ab. Bei dieser Anordnung ist vorteilhaft, dass die Anregung von OPPs bei einer wesentlich höheren Winkeltoleranz als bei einer Anordnung gemäß Figuren 3a und 4 erfolgt. Dies ist vorteilhaft, da bei der Realisierung eines Aufbaus zur Demetallisierung die Strahldivergenz der einfallenden Strahlung weniger eng toleriert werden muss.

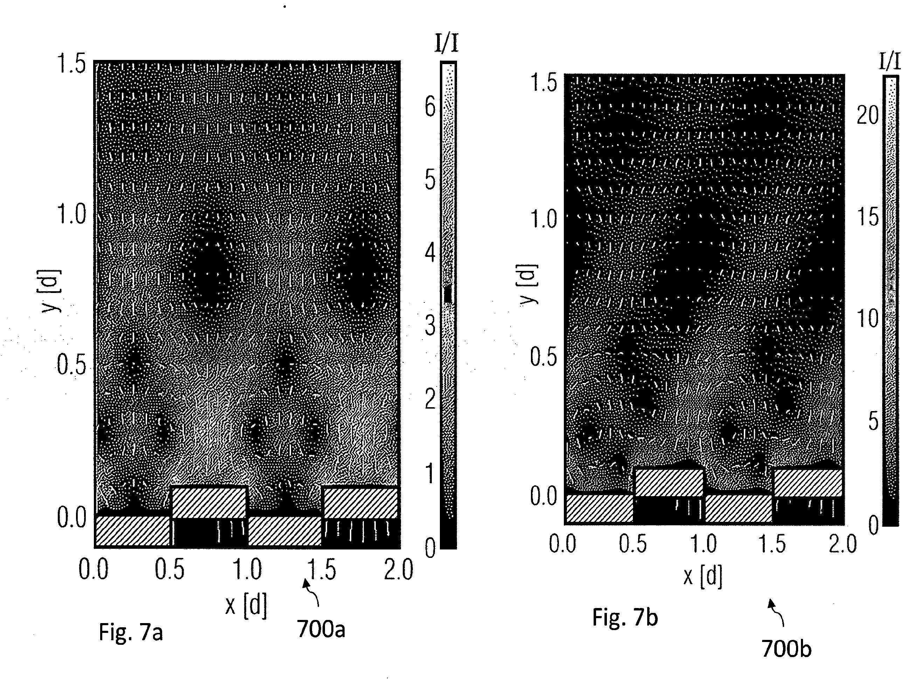

Figuren 7a und 7b zeigen jeweils eine Simulation 700a, 700b der elektromagnetischen Nahfelder bei Anregung von OPPs bei einem Schichtelement gemäß Figuren 3b und 6. Die Darstellungen 700a, 700b der Figuren 7a und 7b sind analog zu den Figuren 5a und 5b zu interpretieren bezüglich der Darstellungsart.

Wesentlicher Unterschied der Simulationen 700a, 700b im Vergleich zu denen der Figuren 5a und 5b sind die verwendeten Parameter und die Bestrahlungssituation. Die Schichtdicke t der Metallschicht 306 aus Aluminium beträgt hier t=70 nm. Die Feldverteilung für senkrechten Einfall ist den Simulationen 500a und 700a ähnlich. In der Simulation 700a ist die Intensität an der Metallschicht etwa um den Faktor 6 höher gegenüber dem Fernfeld. Bei einer Veränderung des Einfallswinkels zu Θ₀=2.4° liegt dieser Wert bei einem Faktor ∼20 gemäß Simulation 700b. Das Feld ist an der Metallschicht stärker lokalisiert als bei den Simulationen 500a, 500b und die maximale Feldintensität ist niedriger.

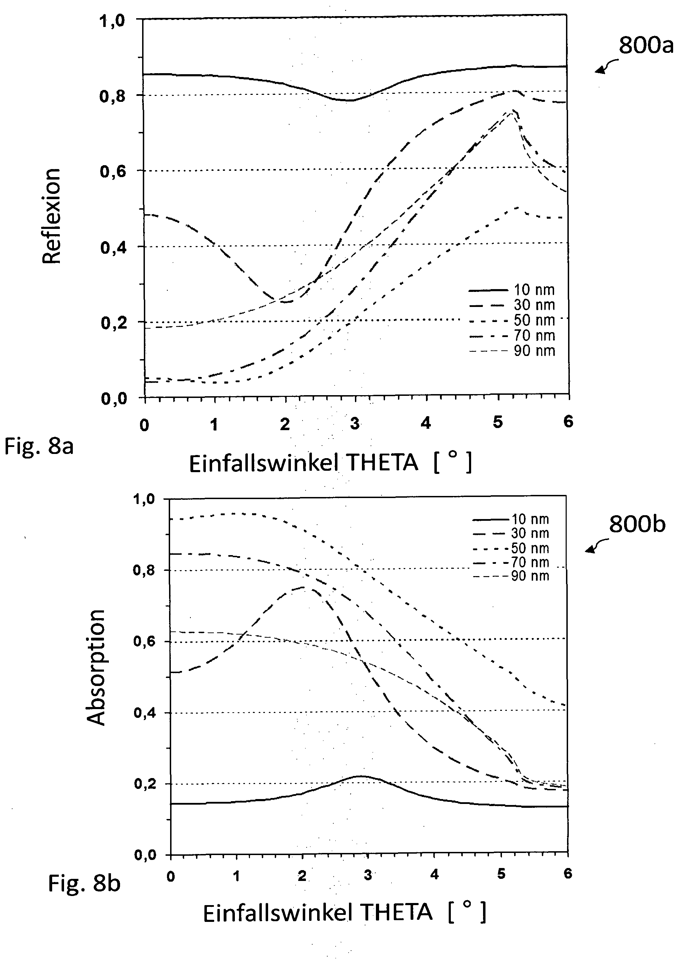

Die in **Figuren 8a und 8b** gezeigten Diagramme 800a, 800b stellen den Einfluss der Profilhöhe h auf die Reflexion sowie die Absorption eines Schichtelements gemäß den Figuren 6 bis 7b als Funktion des Einfallswinkels bei λ=1064 nm dar. Die Diagramme 800a, 800b basieren abweichend von den Parametern zu Fig. 6 auf folgenden Parametern:
Schichtdicke t=60 nm der Metallschicht 303 aus Aluminium
verschiedene Strukturtiefen h=10 nm; 30 nm; 50 nm; 70 nm; und 90 nm

Das Diagramm 800a zeigt den Einfluss der Strukturtiefe h auf den Reflexionsgrad. Das Diagramm 800b zeigt den Einfluss der Strukturtiefe h auf den Absorptionsgrad. Die Resonanz bzw. die Anregung von OPPs ist deutlich in diesen Spektren zu erkennen. Für zunehmende Strukturtiefen h verschiebt sich die Resonanz zu kleineren Einfallswinkeln.

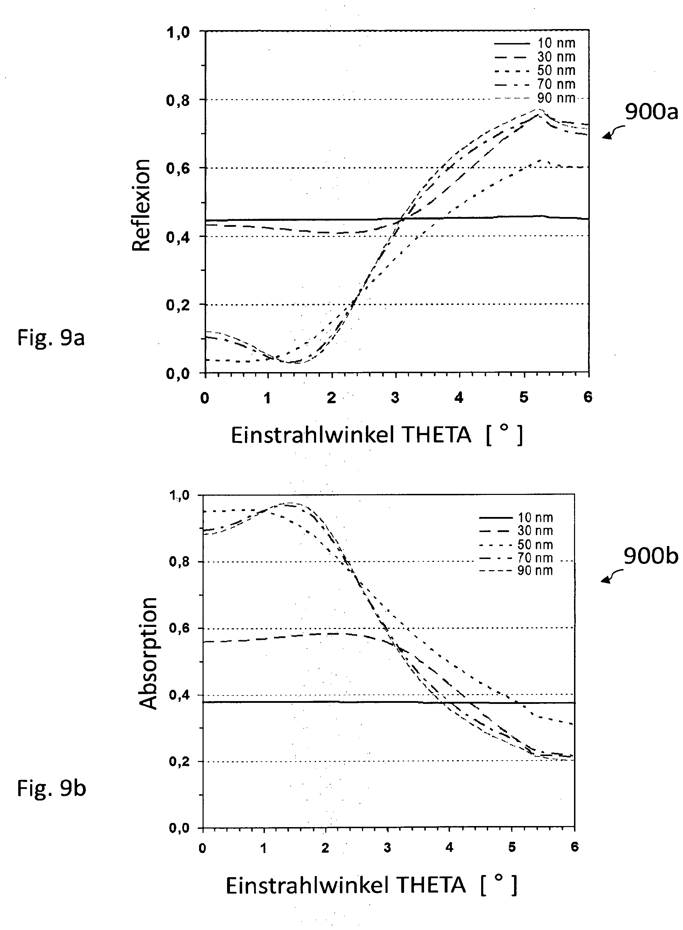

Die in **Figuren 9a und 9b** gezeigten Diagramme 900a, 900b stellen den Einfluss der Schichtdicke t auf die Reflexion sowie die Absorption eines Schichtelements gemäß den Figuren 6 bis 7b als Funktion des Einfallswinkels bei λ=1064 nm dar. Die Diagramme 900a, 900b basieren abweichend von den Parametern zu Fig. 6 auf folgenden Parametern:
Strukturtiefe h=40 nm
verschiedene Schichtdicken t=10 nm; 30 nm; 50 nm; 70 nm; und 90 nm der Metallschicht 303 aus Aluminium

Es ist aus den Figuren 9a und 9b ersichtlich, dass die Resonanzen bzw. Anregung von OPPs ab einer Schichtdicke t von ~40 nm deutlich ausgebildet sind.

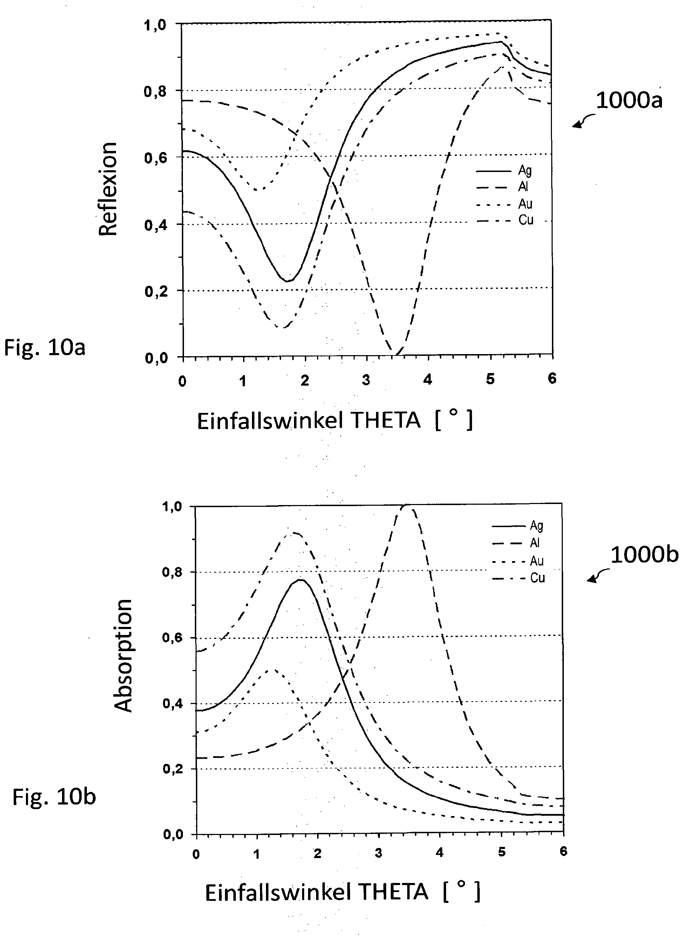

Die in **Figuren 10a und 10b** gezeigten Diagramme 1000a, 1000b stellen den Einfluss des für die Metallschicht 303 verwendeten Materials auf die Reflexion sowie die Absorption eines Schichtelements gemäß den Figuren 6 bis 7b als Funktion des Einfallswinkels bei λ=1064 nm dar. Die Diagramme basieren auf folgenden Parametern:
d=660 nm (Periode der Struktur 304);
b=330 nm (Breite der Struktur 304);
h=40 nm (Strukturtiefe der Struktur 304);
t=70 nm (Schichtdicke der Metallschicht 303);
verschiedene Materialien der Metallschicht 303: Silber (Ag), Aluminium (Al), Gold (Au) und Kupfer (Cu);

Die verschiedenen Schichtelemente, basierend auf den obigen Parametern, zeigen jeweils ein Resonanzmaximum in der Absorption und übereinstimmend ein Minimum in der Reflexion. Am stärksten ausgeprägt ist diese Resonanz (Anregung von OPPs) für Aluminium unter den vorgegebenen geometrischen Parametern.

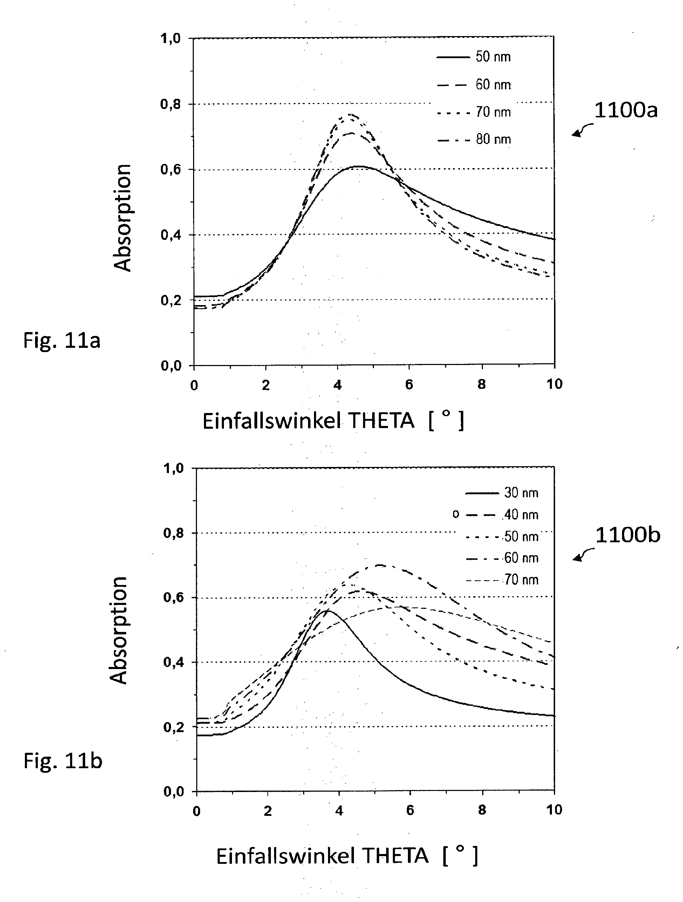

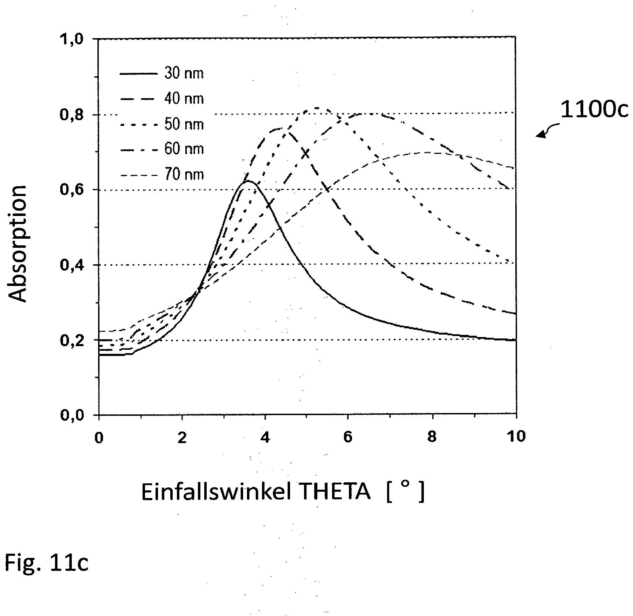

Die in **Figuren 11a bis 11c** gezeigten Diagramme 1100a, 1100b, 1100c stellen die Absorption als Funktion des Einfallswinkels bei TM-polarisiertem Lichteinfall mit einer Wellenlänge von λ=532 nm dar. Die Diagramme 1100a, 1100b, 1100c beruhen auf einem Schichtelement und einer Einfallssituation, wie in Fig. 3a gezeigt. Weiterhin liegen dem Diagrammen folgende Werte zugrunde:
Parameter zu Diagramm 1100a:
   Bestrahlung mit einer Strahlung der Wellenlänge λ=532 nm
   d=540 nm (Periode der Struktur 304)
   b=270 nm (Breite der Struktur 304)
   h=40 nm (Strukturtiefe der Struktur 304)
   Metallschicht: aufgedampftes Aluminium
   n₁=1,52 (Brechungsindex der Prägelackschicht 303)
   verschiedene Schichtdicken t=50 nm; 60 nm; 70 nm; und 80 nm
Parameter zu Diagramm 1100b:
   Bestrahlung mit einer Strahlung der Wellenlänge λ=532 nm
   d=540 nm (Periode der Struktur 304)
   b=270 nm (Breite der Struktur 304)
   t=50 nm (Schichtdicke der Metallschicht 306)
   Metallschicht: aufgedampftes Aluminium
   n₁=1,52 (Brechungsindex der Prägelackschicht 303)
   verschiedene Strukturtiefen h=30 nm; 40 nm; 50 nm; 60 nm; und 70 nm
Parameter zu Diagramm 1100c:
   Bestrahlung mit einer Strahlung der Wellenlänge λ=532 nm
   d=540 nm (Periode der Struktur 304)
   b=270 nm (Breite der Struktur 304)
   t=80 nm (Schichtdicke der Metallschicht 306)
   Metallschicht: aufgedampftes Aluminium
   n₁=1,52 (Brechungsindex der Prägelackschicht 303)
   verschiedene Strukturtiefen h=30 nm; 40 nm; 50 nm; 60 nm; und 70 nm

Alle Spektren in den Diagrammen 1100a, 1100b, 1100c zeigen ein ausgeprägtes Maximum der Absorption für den Winkel Θ₀ ∼ 4°. Aus den Spektren ist ersichtlich, dass eine Strukturtiefe h 40 nm bis 70 nm bei einer Schichtdicke t von 60 nm bis 80 nm und Aluminium als Material für die Metallschicht sich als besonders günstig für die Anregung von OPPs erweisen.

Mit Bezug auf die vorangegangenen Ausführungen ist anzumerken, dass die Struktur/Oberflächenstruktur keine rechteckige Struktur bzw. Reckteckprofil aufweisen muss, um eine Anregung von OPPs zu erreichen. OPPs können auch angeregt werden, wenn die Struktur bzw. das Profil von einer Rechteckform abweicht und beispielsweise sinusförmig ist. Weiterhin können die oben beschriebenen Resonanzeffekte, d.h. die Anregung von OPPs auch an 2-dimensional periodischen Strukturen auftreten und somit zur erhöhten Lichtabsorption führen.

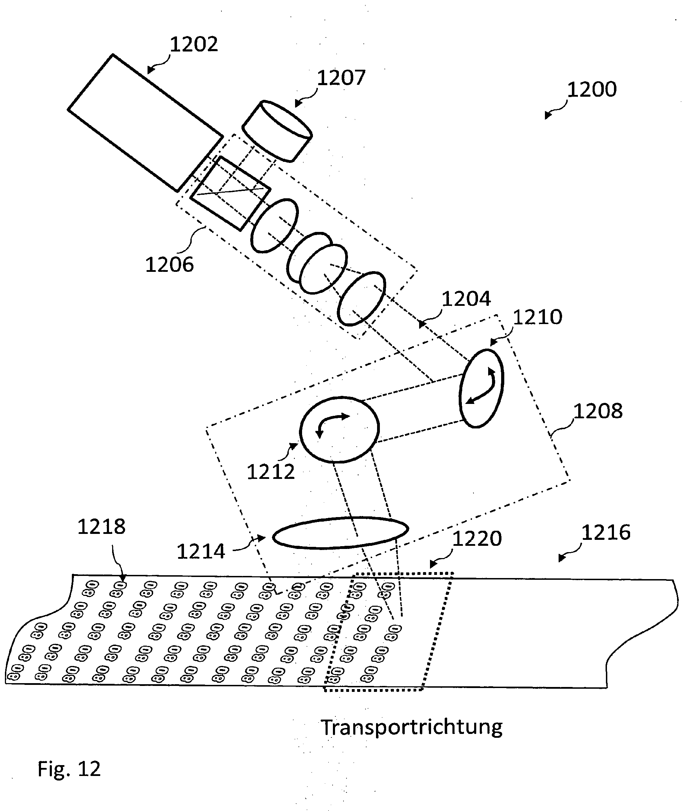

**Fig. 12** zeigt schematisch eine Vorrichtung zum partiellen Demetallisieren eines Schichtelements. Die Vorrichtung weist eine Lasereinrichtung 1200 zum Bestrahlen des Schichtelements mit Laserstrahlung 1204 in einer Bestrahlungszone 1220 auf. Eine Transporteinrichtung (nicht gezeigt) zum Transportieren des Schichtelements transportiert das jeweilige Schichtelement in die Bestrahlungszone 1220 hinein und heraus. Vorzugsweise sind viele Schichtelemente auf einem Schichtelement-Ausgangsmaterial 1216 angeordnet, so dass mehrere Schichtelemente gleichzeitig und/oder in einem kontinuierlichen Verfahren nacheinander bestrahlt werden können. Die Lasereinrichtung 1200 ist auslegt, in der Bestrahlungszone 1220 OPPs an der Metallschicht des jeweiligen Schichtelements anzuregen, so dass in einem ersten Bereich/ Oberflächenbereich 1218 (hier in Form der Zahl 80), der eine erste Struktur/ Oberflächenstruktur aufweist, die Metallschicht entfernt wird.

Vorzugsweise umfasst die Lasereinrichtung 1200 eine Laserquelle 1202, eine optische Einheit 1206, einen Absorber 1207, um eventuell herausgefiltertes Licht bzw. Laserstrahlung zu absorbieren, sowie eine Strahlführungseinrichtung 1208. Die Strahlführungseinrichtung 1208 umfasst vorzugsweise mindestens eine Strahlablenkeinrichtung 1210, welche beispielsweise ein schwenkbarer Spiegel sein kann. Zusätzlich kann die Strahlführungseinrichtung 1208 eine zweite Strahlablenkeinrichtung 1212 umfassen, welche ebenfalls ein schwenkbarer Spiegel sein kann. Weiterhin vorzugsweise umfasst die Strahlführungseinrichtung 1208 eine Planfeldlinse 1214, die beispielsweise ein F-Theta-Objektiv oder ein telezentrisches F-Theta-Objektiv umfasst.

Die Strahlführungseinrichtung 1208 kann beispielsweise auch als sogenannte Scannereinrichtung ausgestaltet sein. Beispielsweise kann die Strahlführungseinrichtung 1208, wie dargestellt, einem 2D-Scanner entsprechen. Alternativ kann eine Strahlführungseinrichtung auch als 3D-Scanner oder Polygongrad etc. ausgestaltet sein. Weiterhin alternativ kann eine Strahlführungseinrichtung aber auch mit einer festen Linienoptik ausgestattet sein, um die Laserstrahlung in dem nötigen Bereich (Bestrahlungszone) der jeweiligen Bereiche der Schichtelemente zu bestrahlen.

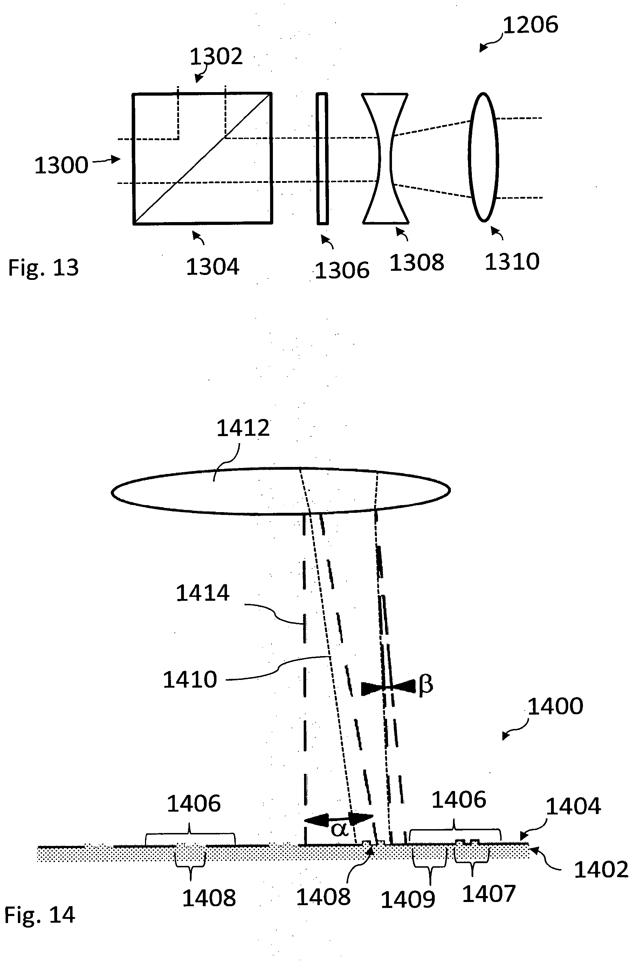

**Fig. 13** zeigt eine schematische Vergrößerung der optischen Einheit 1206, welche die Lasereinrichtung 1200 optional aufweisen kann. Die optische Einheit 1206 umfasst vorzugsweise einen Polarisator 1302, der eingehende Laserstrahlung 1300 polarisiert. Alternativ kann eine Lasereinrichtung 1200 derart gestaltet sein, dass diese bereits polarisierte Laserstrahlung erzeugt, wodurch zusätzliche polarisierende Komponenten im weiteren Strahlengang eingespart werden könnten und der Wirkungsgrad deutlich erhöht werden könnte. Hierzu werden Anteile, die nicht einer bestimmten Polarisation entsprechen, als Strahlung 1302 aus dem Strahlengang für die polarisierte Laserstrahlung herausgefiltert. Insbesondere kann unpolarisierte Laserstrahlung in einem Polarisations-Strahlteilerwürfel oder einem Glan-Prisma als Polarisator in polarisierte Laserstrahlung umgewandelt (gefiltert) werden. Des Weiteren kann die optische Einheit 1206 einen Polarisationsdreher 1306 umfassen, so dass eingehende Laserstrahlung weiter in ihrer Polarisationsrichtung beeinflusst wird, um ein Bestrahlen eines Schichtelements mit TM-polarisierter Laserstrahlung vornehmen zu können. Beispielsweise kann ein Polarisationsdreher 1306 ein λ/2-Plättchen sein. Weiterhin kann die optische Einheit 1206 ein oder mehrere Linsen / -systeme 1308, 1310 aufweisen, um den Strahlquerschnitt der Laserstrahlung 1300 zu vergrößern oder zu reduzieren. Die aus der optischen Einheit 1206 ausgehende Laserstrahlung 1300 ist dann vorteilhafterweise in ihrem Strahlquerschnitt konditioniert.

**Fig. 14** zeigt eine schematische Darstellung einer Bestrahlungssituation eines Schichtelements 1406 mit einem ersten Bereich/ Oberflächenbereich 1407 und mindestens einem zweiten Bereich/ Oberflächenbereich 1409. Der erste Bereich 1407 weist eine erste Struktur (Oberflächenstruktur) 1408 auf, während der mindestens eine zweite Bereich 1409 eine zweite Struktur (Oberflächenstruktur) aufweist, die von der ersten Struktur verschieden ist. Insbesondere zeigt Fig. 14 ein Schichtelement-Ausgangsmaterial 1400 mit einer Vielzahl von Schichtelementen 1406, wobei das Schichtelement-Ausgangsmaterial 1400 bzw. die Schichtelemente 1406 ein Trägersubstrat 1402 und eine Metallschicht 1404 umfasst/ en. Laserstrahlung 1410 wird über eine Planfeldlinse 1412 (kann der Planfeldlinse 1214 entsprechen) auf das Schichtelement 1406 bzw. das Schichtelement-Ausgangsmaterial 1400 gestrahlt. Mittels einer Strahlführungseinrichtung (nicht gezeigt) - wie beispielsweise der Stahlführungseinrichtung 1208 - wird die Laserstrahlung 1410 derart geführt, dass eine Bestrahlung der Metallschicht 1404 des Schichtelements 1406 unter einem Einstrahl- bzw. Einfallswinkel α bezogen auf eine Normale 1414 erfolgt. Der Einfallswinkel α ist vorzugsweise im Bereich von 0° < α < 5°. Die Normale 1414 ist die Normale zu der von der ersten Struktur aufgespannten Ebene. Vorzugsweise weist die auf die Metallschicht 1404 treffende Laserstrahlung 1410 eine Strahldivergenz mit einem Divergenzwinkel β auf, wobei der Divergenzwinkel β vorzugsweise kleiner als 5°, besonders bevorzugt kleiner als 1° in Richtung der Einfallsebene der Laserstrahlung beträgt. Die Einfallsebene der Laserstrahlung 1410 in Fig. 14 entspricht der Zeichenebene. Der Divergenzwinkel in der Richtung normal/ senkrecht zur Einfallsebene (nicht gezeigt) ist vorzugsweise kleiner als 10°. In vorliegender Fig. 14 entspricht der Divergenzwinkel in der Richtung senkrecht zur Einfallsebene der Richtung senkrecht zur Zeichenebene der Fig. 14. In der in Fig. 14 gezeigten Bestrahlungssituation trifft die Laserstrahlung zuerst/ direkt auf die Metallschicht 1404 des Schichtelements 1406.

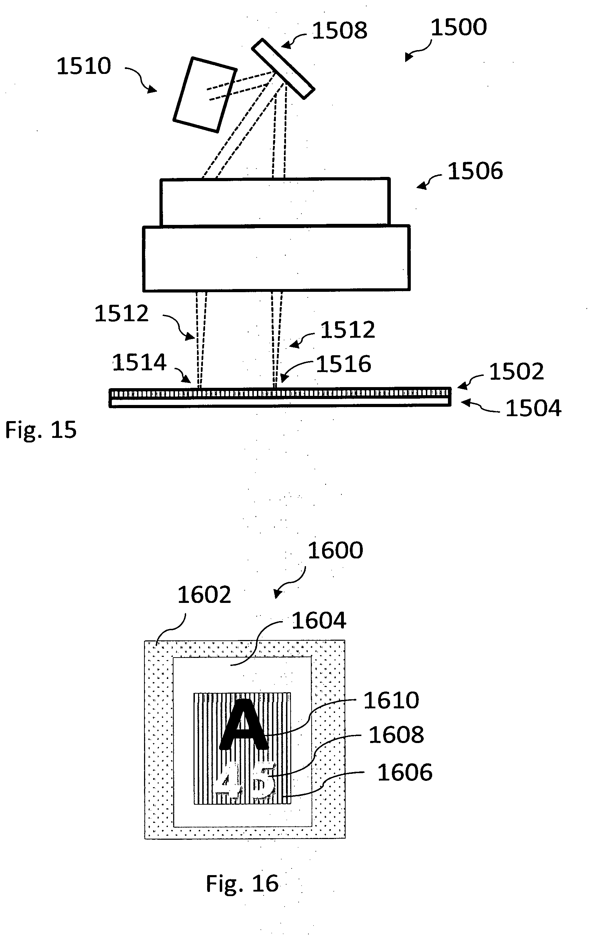

**Fig. 15** zeigt eine schematische Darstellung einer Strahlführung einer Strahlführungseinrichtung 1500 in einer Bestrahlungszone im Querschnitt, z.B. quer zu einer Transportrichtung eines Schichtelements 1504, welches einem Schichtelement 1400 entsprechen kann. Die Strahlführungseinrichtung 1500 umfasst Strahlablenkeinrichtungen 1508, 1510, die den Strahlablenkeinrichtungen 1210,1212 entsprechen können, und ein telezentrisches F-Theta Objektiv 1506. Die Strahlführungseinrichtung 1500 ist derart gestaltet bzw. ausgelegt, um die Fokuslage einer Laserstrahlung 1512, an eine Fokusebene 1502 anzupassen, so dass die Fokusebene 1502 parallel zu der von der ersten Struktur/ Oberflächenstruktur des Schichtelements 1504 aufgespannten Ebene ist. Die Fokusebene 1502 kann insbesondere in der Ebene liegen, die durch die erste Struktur aufgespannt wird. Vorzugsweise ist die Strahlführungseinrichtung 1500 derart ausgelegt, dass die Laserstrahlung über einen Bereich in der Bestrahlungszone geführt werden kann, der größer als der Strahlquerschnitt der Laserstrahlung 1512, ist, so dass eine Bestrahlung mittels Laserstrahlung 1512, in jedem Punkt 1514, 1516 eines zu bestrahlenden Bereichs erfolgen kann, und zwar unter denselben vorgegebenen Einfallswinkeln bzw. Einfallsbedingungen;

**Fig. 16** zeigt einen schematischen Ausschnitt eines Wertdokuments 1600, welches ein Wertdokumentsubstrat 1602 und ein Sicherheitselement 1604 umfasst. Das Sicherheitselement 1604 basiert auf einem Schichtelement, welches mittels Anregung von OPPs partiell demetallisiert wurde. Das Sicherheitselement 1604 weist einen Hologrammbereich 1606, einen Reflexionsbereich 1610 und einen demetallisierten Bereich 1608 auf. Der demetallisierte Bereich 1608 entspricht einem ersten Bereich bzw. Oberflächenbereich und weist eine erste Struktur bzw. Oberflächenstruktur auf. Der Hologrammbereich 1606 bzw. der Reflexionsbereich 1610 entsprechen einem zweiten Bereich/ Oberflächenbereich. Die Struktur bzw. Oberflächenstruktur des Hologrammbereichs 1606 entspricht einer Reliefstruktur. Die Struktur/ Oberflächenstruktur des Reflexionsbereichs 1610 entspricht einer relieffreien Struktur. Die Strukturen des Hologrammbereichs 1606 und des Reflexionsbereichs 1610 unterscheiden sich nicht nur voneinander, sondern auch von der Struktur des demetallisierten Bereichs 1608.

Zur Herstellung des Sicherheitselements 1604 wurde ein Trägersubstrat mit einer Metallschicht versehen, wobei vor oder nach Aufbringen der Metallschicht auf einer Fläche/ Oberfläche des Trägersubstrats die verschiedenen Struktur/ Oberflächenstrukturen des Hologrammbereichs, des Reflexionsbereichs und des demetallisierten Bereichs ausgebildet wurden. Danach wurde das Sicherheitselement 1604 flächig mit Laserstrahlung bestrahlt, wodurch im demetallisierten Bereich 1608 die bis dahin vorhandene Metallschicht durch Anregung von OPPs entfernt wurde. Entsprechend entstand durch die Bestrahlung mit Laserstrahlung der demetallisierte Bereich 1608. Vorteilhafterweise wurde durch die selektive Anregung von OPPs die Metallschicht im Hologrammbereich und im Reflexionsbereich nicht derart beschädigt, dass eine Ablösung der Metallschicht in diesen Bereichen für einen Betrachter mit bloßem Auge erkennbar wäre.

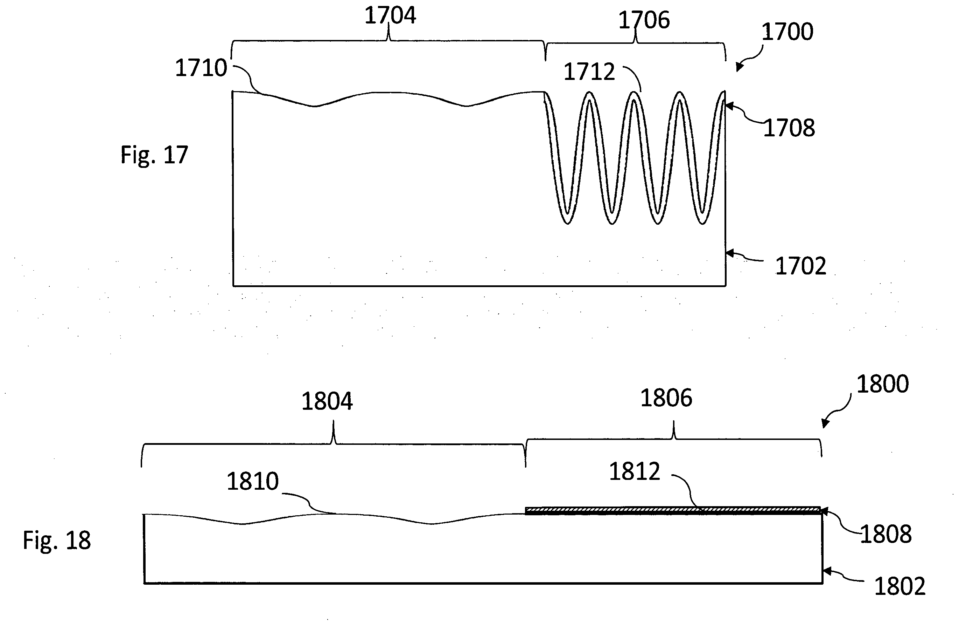

**Fig. 17** zeigt eine schematische Darstellung eines Schichtelements 1700 im Querschnitt. Das Schichtelement 1700 umfasst ein Trägersubstrat 1702, einen ersten (Oberflächen-)Bereich 1704 und einen zweiten (Oberflächen-)Bereich 1706 und eine Metallschicht 1708. Der erste Bereich 1704 weist eine erste (Oberflächen-)Struktur 1710 auf, die ein niedriges Aspektverhältnis z.B. von 0,03 aufweist. Der zweite Bereich 1706 weist eine zweite (Oberflächen-)Struktur 1712 auf, die ein höheres Aspektverhältnis als die erste Struktur 1710 aufweist, z.B. von 0,35 aufweist. Das Schichtelement 1700 wurde mit elektromagnetischer Strahlung (Licht) bestrahlt, sodass im ersten Bereich 1704 OPPs angeregt wurden, wodurch eine Metallschicht im ersten Bereich 1704 entfernt wurde. Der zweite Bereich 1706 wurde mit der gleichen elektromagnetischer Strahlung bestrahlt, jedoch wurden im zweiten Bereich 1706 keine OPPs wie im ersten Bereich 1704 angeregt. Die Metallschicht 1708 wurde daher im zweiten Bereich 1706 nicht entfernt.

Fig. 18 zeigt eine schematische Darstellung eines Schichtelements 1800 im Querschnitt. Das Schichtelement 1800 umfasst ein Trägersubstrat 1802, einen ersten (Oberflächen-)Bereich 1804 und einen zweiten (Oberflächen-) Bereich 1806 und eine Metallschicht 1808. Der erste Bereich 1804 weist eine erste (Oberflächen-)Struktur 1810 auf, die ein Aspektverhältnis z.B. von 0,02 aufweist. Der zweite Bereich 1806 weist eine zweite (Oberflächen-)Struktur 1812 auf, die ein niedrigeres Aspektverhältnis als die erste Struktur 1810 z.B. von 0 aufweist. Das Schichtelement 1800 wurde mit elektromagnetischer Strahlung bestrahlt, so dass im ersten Bereich 1804 OPPs angeregt wurden, wodurch eine Metallschicht im ersten Bereich 1804 entfernt wurde. Der zweite Bereich 1806 wurde mit der gleichen elektromagnetischer Strahlung bestrahlt, jedoch wurden im zweiten Bereich 1806 keine OPPs wie im ersten Bereich 1804 angeregt. Die Metallschicht 1808 wurde daher im zweiten Bereich 1806 nicht entfernt.

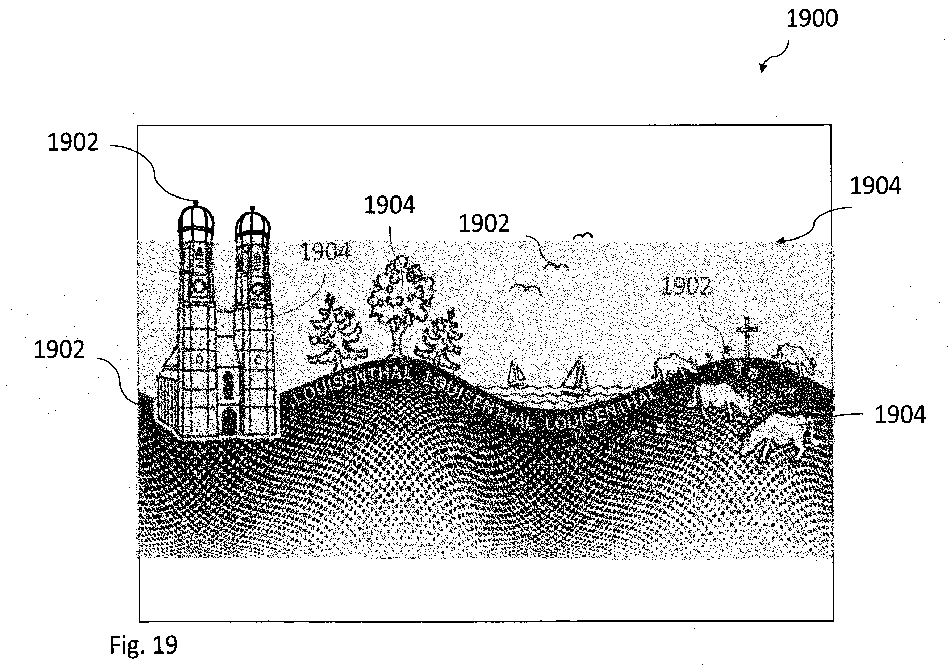

**Fig. 19** zeigt eine schematische Darstellung eines Sicherheitselements 1900 in Aufsicht. Das Sicherheitselement 1900 weist im Wesentlichen zwei Bereiche auf, nämlich metallisierte Bereiche und nicht-metallisierte Bereiche 1902, 1904. Durch Anregung von OPPs kann eine ursprünglich vollflächig aufgebrachte Metallschicht selektiv demetallisiert werden, wobei mittels einer (Oberflächen-)Struktur festgelegt werden kann, ob die Bereiche 1902 oder die Bereiche 1904 demetallisiert werden sollen. Vorteilhafterweise weisen die Bereiche 1902 bzw. 1904 eine Breite von bis zu 4 µm oder schmäler auf. In anderen Worten ist es vorteilhafterweise möglich, nicht nur sehr große Bereiche, sondern auch sehr kleine Bereiche zu demetallisieren.

Mit Bezug auf die vorangegangen Ausführungen ist anzumerken, dass ein Schichtelement mehrere voneinander verschiedene (erste) (Oberflächen-) Strukturen aufweisen kann, an denen OPPs für eine vorgegebene Wellenlänge und vorbestimmtem Einfallswinkel angeregt werden können. Solche voneinander verschiedene (erste) Strukturen können beispielsweise nacheinander demetallisiert werden, indem die Bestrahlungssituation entsprechend geändert wird. Beispielsweise kann der Einfallswinkel und/oder die Einfallsebene und/oder die Polarisation der Strahlung geändert werden.

## Patentansprüche

1. Verfahren zum Herstellen eines partiell demetallisierten Schichtelements (1700, 1800) für Sicherheitselemente, umfassend die Schritte:
- Bereitstellen eines Schichtelements (1700, 1800), aufweisend
-- ein Trägersubstrat (1702, 1802) mit einer Fläche, die mindestens einen ersten und einen zweiten Bereich (1704, 1804; 1706, 1806) aufweist, wobei
der erste Bereich (1704, 1804) eine erste Struktur (1710, 1810) aufweist, die von einer zweiten Struktur (1712, 1812) des zweiten Bereichs (1706, 1806) verschieden ist, und
-- mindestens eine auf der Fläche des Trägersubstrats in dem ersten Bereich und dem zweiten Bereich angeordnete Metallschicht (1708, 1808); und
- Entfernen der Metallschicht (1708, 1808), insbesondere Ablation oder Umwandlung in eine für den Betrachter nicht mehr vorhandene oder transluzente Form, durch Anregung von Oberflächenplasmon-Polaritonen mittels elektromagnetischer Strahlung in dem ersten Bereich (1704, 1804), der die erste Struktur (1710, 1810) aufweist, wobei der Schritt des Entfernens weiterhin umfasst:
Bestrahlen des ersten und des zweiten Bereichs des Schichtelements mit elektromagnetischer Strahlung, wobei die Metallschicht durch die elektromagnetische Strahlung angeregten Oberflächenplasmon-Polaritonen nur im ersten Bereich aufgrund der ersten Struktur entfernt wird.

2. Verfahren nach Anspruch 1, wobei der Schritt des Bereitstellens eines Trägersubstrats weiterhin die Unterschritte umfasst:
Ausbilden der ersten Struktur in dem ersten Bereich des Trägersubstrats, wobei das Trägersubstrat dielektrisches Material aufweist, und wobei das Trägersubstrat vorzugsweise eine Prägeschicht aufweist, welche die erste Struktur aufweist; und/oder
Anordnen der mindestens einen Metallschicht auf der Fläche des Trägersubstrats; wobei die Metallschicht vorzugsweise eine Schichtdicke von 20 nm bis 100 nm und/oder zumindest eines der Materialien Al, Ag, Cu oder Cr aufweist.

3. Verfahren nach einem oder mehreren der Ansprüche 1 bis 2, wobei
die erste Oberflächenstruktur ein Aspektverhältnis von kleiner 0,3, aufweist.

4. Verfahren nach einem oder mehreren der Ansprüche 1 bis 3, wobei
die erste Struktur eine eindimensional periodische Struktur aufweist, oder die erste Struktur eine zweidimensional periodische Struktur aufweist, und/ oder
die erste Struktur eine Periode im Bereich von 350 nm bis 2 µm, vorzugsweise 500 nm bis 750 nm, vorzugsweise von 750 nm bis 1100 nm aufweist.

5. Verfahren nach einem oder mehreren der Ansprüche 1 bis 4, wobei
die erste Struktur als periodische Struktur im Wesentlichen ein Rechteck-oder Sinusprofil aufweist.

6. Verfahren nach einem oder mehreren der Ansprüche 1 bis 5, wobei
die zweite Struktur des mindestens einen zweiten Bereichs eine Reliefstruktur oder eine relieffreie Struktur aufweist, wobei die zweite Struktur als Reliefstruktur vorzugsweise eine diffraktive oder refraktive Struktur aufweist, insbesondere Mottenaugen, Mikrokavitäten, Hologramme, Mikrospiegel oder Mikrolinsen.

7. Verfahren nach einem oder mehreren der Ansprüche 1 bis 7, umfassend:
Festlegen der Geometrieparameter der ersten Struktur, basierend auf einer vorgegebenen elektromagnetischen Strahlung, eines vorgegebenen Einfallswinkels und der Formel *k_{SP} = k_{Photon} sin Θ*₀ ± *n_{V}* G mit G *= 2π*/*d,* wobei *k_{SP}* der Wellenvektor der Oberflächenplasmon-Polaritonen, *k_{Photon}* der Wellenvektor des auf die Metallschicht einfallenden Photons, *Θ*₀ der Einfallswinkel der auf die Metallschicht treffenden elektromagnetischen Strahlung, *n_{V}* ein ganzzahliges Vielfaches, G der reziproke Gittervektor und d die Periode der ersten Struktur ist; und/oder
Bestrahlen der Metallschicht mit elektromagnetischer Strahlung, wobei zwischen der Wellenlänge bzw. den Wellenlängen λ und der Periode d der ersten Struktur folgender Zusammenhang besteht λ ≈ d * n, wobei n der Brechungsindex des Trägersubstrats bzw. Dielektrikums an der Grenzfläche zur Metallschicht ist; und/oder
Bestrahlen der Metallschicht mit elektromagnetischer Strahlung aus einem Wellenlängenbereich von 400 nm bis 2000 nm, vorzugsweise 500 nm bis 550 nm oder 1000 nm bis 1100 nm, weiter vorzugsweise 532 nm oder 1064 nm.

8. Verfahren nach einem oder mehreren der Ansprüche 1 bis 7, umfassend:
Bestrahlen der Metallschicht mit einem Strahl elektromagnetischer Strahlung, der unter einem Einfallswinkel von größer 0° bis 10°, bezogen auf eine Normale zu der von der ersten Struktur aufgespannten Ebene, auf die Metallschicht trifft; und/oder
Bestrahlen der Metallschicht mit dem Strahl elektromagnetischer Strahlung, aufweisend eine Strahldivergenz mit einem Divergenzwinkel von kleiner 5° in Richtung der Einfallsebene; und/oder
Bestrahlen der Metallschicht mit dem Strahl elektromagnetischer Strahlung, aufweisend eine Strahldivergenz mit einem Divergenzwinkel von kleiner als 5°, weiters bevorzugt kleiner als 3°, noch weiter bevorzugt von kleiner als 1° in Richtung der Einfallsebene.

9. Verfahren nach einem oder mehreren der Ansprüche 1 bis 8, umfassend:
Bestrahlen der Metallschicht mittels gepulster elektromagnetischer Strahlung, wobei die gepulste elektromagnetischer Strahlung vorzugsweise eine Pulslänge von 10 - 200 nsec aufweist; und/oder
Polarisieren des Strahls elektromagnetischer Strahlung, so dass die Metallschicht mit TM-polarisierter Strahlung bestrahlt wird; und/oder Bestrahlen der Metallschicht mit Laserstrahlung als elektromagnetischer Strahlung mit einem Top-Hat-förmigen Strahlquerschnitt.

10. Verfahren nach einem oder mehreren der Ansprüche 1 bis 9, umfassend:
Fokussieren des Strahls elektromagnetischer Strahlung, so dass die elektromagnetische Strahlung in einer Fokusebene fokussiert vorliegt, die parallel zu der von der ersten Struktur aufgespannten Ebene liegt; und/oder Ablenken des Strahls elektromagnetischer Strahlung, um die elektromagnetische Strahlung über einen Bereich zu führen, der größer als der Strahlquerschnitt ist, so dass eine Bestrahlung mittels elektromagnetischer Strahlung in jedem Punkt eines zu bestrahlenden Bereichs erfolgen kann; und/oder Transportieren des Schichtelements mittels einer Transporteinrichtung, so dass das Schichtelement in eine Bestrahlungszone hineingeführt und nach dem Schritt des Entfernens aus der Bestrahlungszone herausgeführt wird.

11. Verfahren nach einem oder mehreren der Ansprüche 1 bis 9, wobei das Schichtelement derart bestrahlt wird, dass die Laserstrahlung auf eine Grenzfläche von Metallschicht und Luft trifft oder auf eine Grenzfläche von Metallschicht und einer dielektrischen Schicht trifft.

12. System aus mindestens einem Schichtelement für Sicherheitselemente und einer Vorrichtung zum partiellen Demetallisieren des Schichtelements, die Vorrichtung umfassend:
eine Lasereinrichtung zum Bestrahlen eines Schichtelements mit Laserstrahlung in einer Bestrahlungszone; und
eine Transporteinrichtung zum Transportieren des Schichtelements,
wobei das Schichtelement ein Trägersubstrat mit einer Fläche, die mindestens einen ersten und einen zweiten Bereich aufweist, wobei der erste Bereich eine erste Struktur aufweist, die von der zweiten Struktur des zweiten Bereichs verschieden ist, und mindestens eine auf der Fläche des Trägersubstrats in dem ersten und dem zweiten Bereich angeordnete Metallschicht umfasst, wobei die Metallschicht durch Anregung von Oberflächenplasmon-Polaritonen mittels einer elektromagnetischen Bestrahlung von der Fläche des Trägersubstrats nur in dem ersten Bereich mit der ersten Struktur entfernbar ist, insbesondere durch Ablation oder Umwandlung, und die Metallschicht in dem zweiten Bereich mittels der elektromagnetischen Laser-Bestrahlung nicht entfernbar ist; und
wobei die Lasereinrichtung ausgelegt ist, in der Bestrahlungszone Oberflächenplasmon-Polaritonen an der Metallschicht des Schichtelements anzuregen, sodass in dem ersten Bereich, der die erste Struktur aufweist, die Metallschicht entfernt wird.

13. System nach Anspruch 12 **dadurch gekennzeichnet, dass** die Vorrichtung eingerichtet ist, ein Verfahren nach einem der Ansprüche 1 bis 11 auszuführen.

## Claims

1. A method for manufacturing a partially demetallized layer element (1700, 1800) for security elements, comprising the steps of:
- supplying a layer element (1700, 1800), having
-- a carrier substrate (1702; 1802) with a face having at least one first and one second region (1704, 1804; 1706, 1806), wherein
the first region (1704, 1804) has a first structure (1710, 1810) which is different from a second structure (1712, 1812) of the second region (1706, 1806), and
-- at least one metal layer (1708, 1808) arranged on the face of the carrier substrate in the first region and the second region; and
- removing the metal layer (1708, 1808), in particular by ablation or conversion to a form no longer present for the viewer or translucent, by exciting surface plasmon polaritons by means of electromagnetic radiation in the first region (1704, 1804), which has the first structure (1710, 1810), wherein the step of removing further comprises:
irradiating the first and the second region of the layer element with electromagnetic radiation, wherein the metal layer is removed only in the first region on account of the first structure by the surface plasmon polaritons excited by the electromagnetic radiation.

2. The method according to claim 1, wherein the step of supplying a carrier substrate further comprises the substeps of:
forming the first structure in the first region of the carrier substrate, wherein the carrier substrate has dielectric material, and wherein
the carrier substrate preferably has an emboss layer having the first structure; and/or arranging the at least one metal layer on the face of the carrier substrate; wherein the metal layer preferably has a layer thickness of 20 nm to 100 nm and/or at least one of the materials Al, Ag, Cu or Cr.

3. The method according to one or more of claims 1 to 2, wherein the first surface structure has an aspect ratio of smaller than 0.3.

4. The method according to one or more of claims 1 to 3, wherein the first structure has a one-dimensionally periodic structure, or the first structure has a two-dimensionally periodic structure, and/or
the first structure has a period in the range of 350 nm to 2 µm, preferably 500 nm to 750 nm, preferably of 750 nm to 1100 nm.

5. The method according to one or more of claims 1 to 4, wherein the first structure has substantially a rectangular or sinusoidal profile as a periodic structure.

6. The method according to one or more of claims 1 to 5, wherein the second structure of the at least one second region has a relief structure or a relief-free structure, with the second structure preferably having a diffractive or refractive structure as a relief structure, in particular moth-eyes, microcavities, holograms, micromirrors or microlenses.

7. The method according to one or more of claims 1 to 7, comprising:
stipulating the geometric parameters of the first structure, on the basis of a pre-specified electromagnetic radiation, of a pre-specified angle of incidence and the formula *k_{SP} = k_{Photon} sin Θ*₀ ± *n*_{V} G with G *=* 2 *π*/*d,* wherein *k_{SP}* is the wave vector of the surface plasmon polaritons, *k_{Photon}* the wave vector of the photon incident on the metal layer, *Θ*₀ the angle of incidence of the electromagnetic radiation impinging on the metal layer, *nv* an integral multiple, G the reciprocal grating vector, and *d* the period of the first structure; and/or
irradiating the metal layer with electromagnetic radiation, there existing between the wavelength or the wavelengths λ and the period d of the first structure the following relation λ ≈ d * n, where n is the refractive index of the carrier substrate or dielectric at the interface to the metal layer; and/or
irradiating the metal layer with electromagnetic radiation from a wavelength range of 400 nm to 2000 nm, preferably 500 nm to 550 nm or 1000 nm to 1100 nm, further preferably 532 nm or 1064 nm.

8. The method according to one or more of claims 1 to 7, comprising:
irradiating the metal layer with a beam of electromagnetic radiation which impinges on the metal layer at an angle of incidence of greater than 0° to 10°, based on a normal to the plane spanned by the first structure; and/or
irradiating the metal layer with the beam of electromagnetic radiation, having a beam divergence with a divergence angle of smaller than 5° in the direction of the plane of incidence; and/or
irradiating the metal layer with the beam of electromagnetic radiation, having a beam divergence with a divergence angle of smaller than 5°, further preferably smaller than 3°, still further preferably of smaller than 1°, in the direction of the plane of incidence.

9. The method according to one or more of claims 1 to 8, comprising:
irradiating the metal layer by means of pulsed electromagnetic radiation, with the pulsed electromagnetic radiation preferably having a pulse length of 10 - 200 nsec; and/or
polarizing the beam of electromagnetic radiation, so that the metal layer is irradiated with TM-polarized radiation; and/or irradiating the metal layer with laser radiation as electromagnetic radiation with a top-hat-shaped beam cross section.

10. The method according to one or more of claims 1 to 9, comprising:
focusing the beam of electromagnetic radiation, so that the electromagnetic radiation is present so as to be focused in a focal plane that lies parallel to the plane spanned by the first structure; and/or deflecting the beam of electromagnetic radiation in order to guide the electromagnetic radiation over a region that is greater than the beam cross section, so that an irradiation by means of electromagnetic radiation can be effected at every point of a region to be irradiated; and/or transporting the layer element by means of a transport device, so that the layer element is guided into an irradiation zone, and guided out of the irradiation zone after the removing step.

11. The method according to one or more of claims 1 to 9, wherein the layer element is irradiated such that the laser radiation impinges on an interface of metal layer and air or impinges on an interface of metal layer and a dielectric layer.

12. A system of at least one layer element for security elements and an apparatus for partially demetallizing the layer element, the apparatus comprising:
a laser device for irradiating a layer element with laser radiation in an irradiation zone; and
a transport device for transporting the layer element, wherein the layer element comprises a carrier substrate with a face that has at least one first and one second region, wherein the first region has a first structure which is different from the second structure of the second region, and comprises at least one metal layer arranged on the face of the carrier substrate in the first and the second region,
wherein the metal layer is removable by excitation of surface plasmon polaritons by means of an electromagnetic irradiation from the face of the carrier substrate only in the first region with the first structure, in particular by ablation or conversion, and
the metal layer in the second region is not removable by means of electromagnetic laser irradiation; and wherein the laser device is designed to excite, in the irradiation zone, surface plasmon polaritons at the metal layer of the layer element, so that the metal layer is removed in the first region having the first structure.

13. The system according to claim 12, **characterized in that** the apparatus is adapted to execute a method according to any of claims 1 to 11.

## Revendications

1. Procédé de fabrication d'un élément en couches (1700, 1800) partiellement démétallisé pour éléments de sécurité, comprenant les étapes :
- mise à disposition d'un élément en couches (1700, 1800) comprenant :
- un substrat porteur (1702, 1802) ayant une surface comportant au moins une première et une deuxième zone (1704, 1804; 1706, 1806), cependant que
la première zone (1704, 1804) comporte une première structure (1710, 1810) différente d'une deuxième structure (1712, 1812) de la deuxième zone (1706, 1806), et
- au moins une couche métallique (1708, 1808) agencée sur la surface du substrat porteur dans la première zone et dans la deuxième zone ; et
- enlèvement de la couche métallique (1708, 1808), en particulier ablation ou transformation en une forme n'existant plus pour l'observateur ou translucide, par excitation de polaritons de plasmon de surface au moyen de rayonnement électromagnétique dans la première zone (1704, 1804) comportant la première structure (1710, 1810),
cependant que l'étape de l'enlèvement comprend en outre :
irradiation de la première et de la deuxième zone de l'élément en couches avec un rayonnement électromagnétique, cependant que la couche métallique n'est enlevée, par les polaritons de plasmon de surface excités par rayonnement électromagnétique, seulement dans la première zone en raison de la première structure.

2. Procédé selon la revendication 1, cependant que l'étape de la mise à disposition d'un substrat porteur comprend en outre les sous-étapes :
génération de la première structure dans la première zone du substrat porteur, cependant que le substrat porteur comporte du matériau diélectrique, et cependant que le substrat porteur comporte de préférence une couche gaufrée qui comporte la première structure ; et / ou
agencement de la au moins une couche métallique sur la surface du substrat porteur ;
cependant que la couche métallique présente de préférence une épaisseur de couche comprise entre 20 nm et 100 nm et / ou comporte au moins un des matériaux Al, Ag, Cu ou Cr.

3. Procédé selon une ou plusieurs des revendications de 1 à 2, cependant que la première structure de surface présente un rapport d'aspect inférieur à 0,3.

4. Procédé selon une ou plusieurs des revendications de 1 à 3, cependant que la première structure comporte une structure périodique unidimensionnelle, ou que la première structure comporte une structure périodique bidimensionnelle, et / ou
que la première structure présente une période de l'ordre de 350 nm à 2 µm, de préférence de 500 nm à 750 nm, de préférence de 750 nm à 1100 nm.

5. Procédé selon une ou plusieurs des revendications de 1 à 4, cependant que la première structure comporte, en tant que structure périodique, essentiellement un profil rectangulaire ou sinusoïdal.

6. Procédé selon une ou plusieurs des revendications de 1 à 5, cependant que la deuxième structure de la au moins une deuxième zone comporte une structure en relief ou une structure sans relief, cependant que la deuxième structure comporte, en tant que structure en relief, de préférence une structure diffractive ou réfractive, en particulier des yeux de mite, des micro-cavités, des hologrammes, des micro-miroirs ou micro-lentilles.

7. Procédé selon une ou plusieurs des revendications de 1 à 7, comprenant :
détermination des paramètres de géométrie de la première structure, sur la base d'un rayonnement électromagnétique prédéterminé, d'un angle d'incidence prédéterminé et de la formule *k_{SP} = k_{Photon} sin Θ₀* ± *n_{V}* G sachant que G = *2 π*/*d,* cependant que *k_{SP}* est le vecteur d'onde des polaritons de plasmon de surface, *k_{Photon}* le vecteur d'onde du photon incident sur la couche métallique, *Θ₀* l'angle d'incidence du rayonnement électromagnétique rencontrant la couche métallique, *nᵥ* un multiple entier, G le vecteur réciproque de grille, et *d* la période de la première structure ; et / ou
irradiation de la couche métallique avec un rayonnement électromagnétique, cependant que, entre la longueur d'onde ou les longueurs d'onde λ et la période d de la première structure, il y a le rapport suivant λ ≈ d * n, cependant que n est l'indice de réfraction du substrat porteur ou du diélectrique à la surface limite vers la couche métallique ; et / ou
irradiation de la couche métallique avec un rayonnement électromagnétique d'une plage de longueurs d'onde comprise entre 400 nm et 2000 nm, de préférence entre 500 nm et 550 nm ou entre 1000 nm et 1100 nm, en outre de préférence entre 532 nm et 1064 nm.

8. Procédé selon une ou plusieurs des revendications de 1 à 7, comprenant :
irradiation de la couche métallique avec un faisceau de rayonnement électromagnétique qui, sous un angle d'incidence de supérieur à 0° jusqu'à 10°, relativement à une normale au plan défini par la première structure, vient rencontrer la couche métallique ; et / ou
irradiation de la couche métallique avec un faisceau de rayonnement électromagnétique présentant une divergence de faisceau ayant un angle de divergence inférieur à 5° en direction du plan d'incidence ; et / ou
irradiation de la couche métallique avec un faisceau de rayonnement électromagnétique présentant une divergence de faisceau ayant un angle de divergence inférieur à 5°, en outre de préférence inférieur à 3°, encore en outre de préférence inférieur à 1°, en direction du plan d'incidence.

9. Procédé selon une ou plusieurs des revendications de 1 à 8, comprenant :
irradiation de la couche métallique au moyen de rayonnement électromagnétique pulsé, le rayonnement électromagnétique pulsé ayant de préférence une longueur d'impulsion comprise entre 10 et 200 nsec ; et / ou
polarisation du faisceau de rayonnement électromagnétique de telle manière que la couche métallique est irradiée avec du rayonnement polarisé TM ; et / ou
irradiation de la couche métallique avec un rayonnement laser en tant que rayonnement électromagnétique, ayant une section transversale de faisceau en haut-de-forme.

10. Procédé selon une ou plusieurs des revendications de 1 à 9, comprenant :
focalisation du faisceau de rayonnement électromagnétique de telle manière que le rayonnement électromagnétique se trouve focalisé dans un plan focal parallèle au plan défini par la première structure ; et / ou
déviation du faisceau de rayonnement électromagnétique afin de conduire le rayonnement électromagnétique sur une zone plus grande que la section transversale de faisceau, de telle manière qu'une irradiation au moyen de rayonnement électromagnétique peut avoir lieu dans chaque point d'une zone à irradier ; et / ou
transport de l'élément en couches au moyen d'un équipement de transport, de telle façon que l'élément en couches est amené dans une zone d'irradiation et est, après l'étape de l'enlèvement, retiré de la zone d'irradiation.

11. Procédé selon une ou plusieurs des revendications de 1 à 9, cependant que l'élément en couches est irradié de telle façon que le rayonnement laser rencontre une surface limite de couche métallique et air, ou rencontre une surface limite de couche métallique et d'une couche diélectrique.

12. Système consistant en au moins un élément en couches pour éléments de sécurité et en un dispositif de démétallisation partielle de l'élément en couches , le dispositif comprenant :
un équipement laser pour irradiation d'un élément en couches avec du rayonnement laser dans une zone d'irradiation ; et
un équipement de transport pour le transport de l'élément en couches, cependant que l'élément en couches comporte un substrat porteur ayant une surface comportant au moins une première et une deuxième zone, cependant que la première zone comporte une première structure différente de la deuxième structure de la deuxième zone, et comprend au moins une couche métallique agencée sur la surface du substrat porteur dans la première zone et dans la deuxième zone, cependant que la couche métallique ne peut, par excitation de polaritons de plasmon de surface au moyen d'un rayonnement électromagnétique, n'être enlevée de la surface du substrat porteur que dans la première zone dotée de la première structure, en particulier par ablation ou transformation, et que la couche métallique ne pas être enlevée au moyen du rayonnement laser électromagnétique dans la deuxième zone ; et
cependant que l'équipement laser est conçu pour exciter dans la zone d'irradiation des polaritons de plasmon de surface à la couche métallique de l'élément en couches, de telle sorte que, dans la première zone comportant la première structure, la couche métallique est enlevée.

13. Système selon la revendications 12, **caractérisé en ce que** le dispositif est équipé pour exécuter un procédé selon une des revendications de 1 à 11.
